# EUROPEAN PATENT APPLICATION

(11) **EP 1 130 490 A2**
(43) Date of publication of application: **05.09.2001**
(21) Application number: 00308294.8
(22) Date of filing: 22.09.2000
(51) Int. Cl.: G06F 1/00

(54) **Method for secure distribution of digital products**

(30) Priority: 18.02.2000 JP 2000046777; 18.02.2000 JP 2000046778
(71) Applicant: M. Ken Co. Ltd., Tokyo (JP)
(72) Inventor: Inoue, Akira, c/o M. KEN Co. Limited, Tokyo (JP); Suzuki, Akira, c/o M. KEN Co. Ltd., Tokyo (JP); Miyachi, Naoto, c/o M. KEN Co. Ltd., Tokyo (JP); Okamoto, Itsuaki, c/o M. KEN Co. Ltd, Tokyo (JP); Ohkoshi, Yutaka, c/o M. KEN Co. Ltd., Tokyo (JP)
(74) Representative: Moir, Michael Christopher

(57) **Abstract**

A content distribution system has a content processing means for encrypting content into which is embedded a digital watermark so as to obtain distributed content, a distribution contract execution means for the content, a containing forming means, which, with respect to distribution content selected by a user, adds a content driving program based on a prescribed usage environment and usage conditions, and management program to manage a content usage status, so as to form a container, a distribution means, which distributes the container to a transmission path, a electronic player supplying means, which supplies the an electronic player that plays back the container, a playback means, a content usage status analysis means, which, for each played back content of the container, transfers the playback status to a usage status analysis system, so as to manage recording of the usage status of the content, and an improper usage monitoring means, which monitors improper use of the content, wherein a computer is caused to control the above-noted means.

## Description

### BACKGROUND OF THE INVENTION

### 1. Field of the Invention

The present invention relates to a method and a system for distributing content formed by digital information, and more particularly it relates to a method and system for distributing digital content via a transmission path such as a wide area information network such as the Internet, and to an associated distribution apparatus.

### 2. Description of the Related Art

In recent years, advancements in information technology have made it simple to exchange large amounts of digital content using computers connected via an open network such as the Internet. On the Internet, there is active exchange being conducted of works (digital content) such as application programs, music, movies, images, and games.

This digital content can be easily copied, edited, and transferred, and does not exhibit a deterioration in quality when these operations are performed thereon.

For this reason, it is expected that a third party without the proper right to do so will improperly use the digital content.

Accordingly, from the standpoint of protecting the rights of the provider of digital content, it is essential to have a system for billing for digital content, and for achieving protection against copying and discovery thereof.

In the past, to protect the copyright of digital content a system was proposed whereby an digital watermark was embedded in the digital content to enable control thereof.

The digital watermark is embedded into the digital content, so as to render rights information identifying the digital content or the copyright difficult to alter.

In a system using such a digital watermark, the copyright of the content provider, for example, is protected by consigning the digital content and the rights information to a service provider, which uses an embedding server or the like to generate content that includes the digital watermark.

In recent years, technology known as a super distribution system has been proposed as a method for billing with respect to digital content.

In a super distribution system, the characteristic of copyability of digital data is used, with copying and use of digital content permitted, although billing is done therefor.

That is, whereas digital content are encrypted and the access to the encrypted digital content is freely allowed, use thereof is not possible without the purchase of a key for decryption thereof, thereby seeking to protect the copyright of the content.

Accordingly, it is an object of at least the preferred embodiments of the present invention to improve on the above-noted drawbacks in the prior art, by providing a method or system for distribution of digital content whereby is configured as system wherein in publicly selling copyright digital content, a user having purchased the digital content cannot perform improper actions such as would violate the copyright or a system wherein should a user perform an improper action such as would violate the copyright, it is possible to reliably prosecute such actions such as to enable securely to follow such un-lawful action caused by the user, so that the system or method enables to distribute the content, easily.

In addition to enabling simple distribution of digital content, this system can reliably protect the copyright of the digital content, enables payment of a proper copyright fee to the copyright owner, and provides the ability to perform almost all processing automatically.

### SUMMARY OF THE INVENTION

The present invention has a technical constitution as set out in any of the : independent claims. Preferred aspects are as set out in the subordinate claims.

Specifically, one -aspect of the present invention is a method for distributing content formed by digital information, this method having
a step of embedding at least one of copyright information, distributor information, and user information into the digital content as a digital watermark,
a step of encrypting the content into which such digital water mark has been embedded and adding to the content information with regard to either one of the form of use of the content or information with regard to a copyright fee, so as to create content to be distributed,
a step whereby the distributor publicly discloses, via a transmission path, a list of content, including one or a plurality of the contents, in each of which watermark information has been embedded into digital information,
a step whereby a user accesses the content list via the transmission path, using the user's terminal,
a step whereby if the user wishes to use a content selected by the user, the user accesses a contract execution system connected to the transmission path using the user's terminal via the transmission path, whereupon between the distributor and the user, while referencing at least one of the usage environment predeterminedly established by the distributor for each one of the contents, selected from the usage conditions and the usage fee, with respect to the distribution of the contents, performing at least one of a registration of the name of the user of the content, selection of the usage environment and a selection of the usage conditions, and specifically performing an establishment of at least one of the usage fee, including copyright fee and a method of payment which should be determined by at least one of such usage environment and usage condition as selected.
a step after establishing agreement in the contract execution system as to a contract between the distributor and the user with regard to the distribution of the content, whereby the distributor verifies whether or not the user has paid a contract fee,
a step whereby the distributor forms a container by further adding to the selected encrypted content for distribution information with regard to at least one of the content usage environment and the content usage conditions, and the name of the user, and further adding there to a content drive program based upon such content usage environment and the content usage conditions and a management program for managing the usage state of the content,
a step whereby, in the case in which at the distributor there has been verification that the user has made payment of the prescribed usage fee, by transfer into a priorly specified bank account, or by electronic payment, the container is distributed to the transmission path via the distribution system,
a step whereby an electronic player including a decryption key for playback of the container is prepared and supplied,
a step whereby the user priorly downloads an electronic player to the user's terminal,
a step whereby the user uses the electronic player to play back the distributed content,
a step whereby the electronic player reads out a part of the encrypted content, and plays back the part of the content as it decrypts same, the part thereof being deleted after playback, and another part of the content being read out therefrom and played back as it is decrypted, followed by deletion thereof after the end of playback, this process being repeated thereafter,
a step whereby, at every time when each content included in the container being playbacked, either a playback status is directly transferred to a usage status analysis system connected to the transmission path by causing the management program included within the container to operate, or the content usage status is first temporarily stored into a storage means provided within the container, and then transferred via the transmission path, to a usage status analysis system connected to the transmission path, so as to manage recording of the usage status for each content,
a step whereby in the case in which an attempt is made to use the content such that the content usage environment according to the contract conditions is violated or in which the content usage conditions will be violated, or in a case in which the content is used under a condition exceeding the pre-established condition or in a case in which an attempt of usage is made in violation of a pre-established warning, the management program provided within the container terminates the drive program of the container,
a step whereby constant global monitoring operation is performed via the transmission path with regard to whether or not an attempt is being made to improperly use the content, and in the case in which content resembling to a content that is suspected of improper usage is discovered, an operation is executed thereto to identify whether or not the content includes digital watermark information and, if digital watermark information is detected, a comparison is made with respect to the watermark information of each content to have been detected, in a content storage database into which are stored contents into which has been priorly embedded digital watermark information,
a step whereby, in the case in which payment to the distributor of a usage fee for the prescribed content has been received from the user by the distributor, processing is performed so as to pay a prescribed copyright fee to a copyright owner of the content, based on the copyright information of the distributed content, and
a step whereby a computer controls at least one step of the foregoing steps.

A second aspect of the present invention is a system for distributing content formed by digital information, this system having
means for embedding at least one of copyright information, distributor information, and user information into the digital content as a digital watermark,
means for processing content into which such digital water mark has been embedded, for distribution to by encrypting the content and adding to the content information with regard to either one of the form of use of the content or information with regard to a copyright fee, so as to create content to be distributed,
means for public disclosure by the distributor, via a transmission path, of a list of content, including one or a plurality of the contents, into which watermark information has been embedded,
means for access by a user of the content list via the transmission path, using the user's terminal,
means for contract execution, connected to the transmission path, which, if the user wishes to use a content selected by the user, can be accessed by the user using the user's terminal via the transmission path, whereupon between the distributor and the user, while referencing at least one of the usage environment predeterminedly established by the distributor for each one of the contents, selected from the usage conditions and the usage fee, with respect to the distribution of the contents, performing at least one of a registration of the name of the user of the content, selection of the usage environment and a selection of the usage conditions, and specifically performing an establishment of at least one of the usage fee, including copyright fee and a method of payment which should be determined by at least one of such usage environment and usage condition as selected.
means for confirming payment whereby, after establishing agreement in the contract execution system as to a contract between the distributor and the user with regard to the distribution of the content, the distributor verifies whether or not the user has paid a contract fee,
means for forming container, whereby the distributor forms a container by further adding to the selected encrypted content for distribution information with regard to at least one of the content usage environment and the content usage conditions, and the name of the user, and further adding there to a content drive program based upon such content usage environment and the content usage conditions and a management program for managing the usage state of the content,
means for distributing container, whereby, in the case in which at the distributor there has been verification that the user has made payment of the prescribed usage fee, by transfer into a priorly specified bank account, or by electronic payment, the container is distributed to the transmission path via the distribution system,
means for supplying an electronic player, whereby an electronic player, which includes a decryption key for playback of the container, is prepared and supplied,
means for down-loading an electronic player, whereby the user priorly downloads to the user's terminal the electronic player,
means for playbacking the container, whereby the user uses the electronic player to play back the distributed container,
the electronic player reading out a part of the encrypted content, and playing back the part of the content as it decrypts same, the part thereof being deleted after playback, and another part of the content being read out therefrom and played back as it is decrypted, followed by deletion thereof after the end of playback, this process being repeated thereafter,
means for analysing content usage status, whereby, at every time when each content included in the container being playbacked, either a playback status is directly transferred to a usage status analysis system connected to the transmission path, or the content usage status is first temporarily stored into a storage means provided within the container, and then transferred via the transmission path, to a usage status analysis system connected to the transmission path, so as to manage recording of the usage status for each content,
a management programming means whereby, in the case in which an attempt is made to use the content such that the content usage environment according to the contract conditions is violated or in which the content usage conditions will be violated, or in a case in which the content is used under a condition exceeding the pre-established condition or in a case in which an attempt of usage is made in violation of a pre-established warning, the management program provided within the container terminates the drive program of the container,
means for monitoring improper usage of contents, whereby constant global monitoring operation is performed via the transmission path with regard to whether or not an attempt is being made to improperly use the content, and in the case in which content resembling to a content that is suspected of improper usage is discovered, an operation is executed thereto to identify whether or not the content includes digital watermark information and, if digital watermark information is detected, a comparison is made with respect to the watermark information of each content to have been detected, in a content storage database into which are stored contents into which has been priorly embedded digital watermark information,
means for paying copyright fees, whereby, in the case in which payment with respect to prescribed content has been received from the user by the distributor, processing is performed so as to pay a prescribed copyright fee to a copyright owner of the content, based on the copyright information of the distributed content,
and further wherein of the above-noted means, minimally a disclosing means for disclosing the stored content for distribution to a transmission path, the contract execution means, the container distribution means, a user terminal means, a usage status analysis system means, and a content improper usage monitoring means are connected to the transmission path, and wherein a computer is caused to perform control thereof.

By adopting the technical constitution described above, a digital content distribution method or digital content distribution system according to the present invention enables easy on-line distribution to and use by a user of digital content which includes prescribed copyright information, via a wide-area network such as the Internet, and additionally by the intervention of a high-level monitoring system, is not only capable of preventing improper use, including violation of copyright of digital content, and performing reliable execution of payment of a proper copyright fee to the copyright owner of the digital content,but also capable of simultaneous execution of a usage status analysis system analyzing how the digital content is being used by a plurality of user, thereby providing a superior digital content distribution system and method that can obtain market information with regard to digital content.

Additionally, because a digital content distribution system and method according to the present invention provides almost entirely automated operation, it enables operation at a low cost.

### BRIEF DESCRIPTION OF THE DRAWINGS

Fig. 1 is a block diagram showing an example of the configuration of a digital content distribution system according to the present invention.

Fig. 2 is a flowchart showing an example of the operation procedure of a digital content distribution system according to the present invention.

Fig. 3 is a flowchart showing an example of the operation procedure of a digital content distribution system according to the present invention.

Fig. 4 is a flowchart showing an example of the operation procedure for playback processing in a digital content distribution system according to the present invention.

Fig. 5 is a block diagram showing an example of the configuration of a distribution container according to the present invention.

Fig. 6 is a block diagram showing an example of the configuration of an electronic player according to the present invention.

Fig. 7 is a block diagram showing the overall configuration of a digital content distribution system according to the first embodiment of the present invention.

Fig. 8 is a drawing illustrating a series of operations in a digital content distribution system configured such as shown in Fig. 7.

Fig. 9 is a block diagram showing the overall configuration of a digital content distribution system according to the second embodiment of the present invention.

Fig. 10 is a drawing showing an example of the configuration of a container encoder provided in a content creator terminal according to the second embodiment of the present invention.

Fig. 11 is a drawing showing an example of the configuration of a container decoder provided in a user terminal according to the second embodiment of the present invention.

Fig. 12 is a drawing showing an example of the configuration of a key management section provided in a license issuing center according to the second embodiment of the present invention.

Fig. 13 is a drawing illustrating a series of operations in a digital content distribution system configured such as shown in Fig. 9.

Fig. 14 is a block diagram showing the overall configuration of a digital content distribution system according to the third embodiment of the present invention.

Fig. 15 is a drawing illustrating a series of operations in a digital content distribution system configured such as shown in Pig. 14.

Fig. 16 is a block diagram showing the overall configuration of a digital content distribution system according to an embodiment of the present invention.

Fig. 17 is a drawing illustrating a series of operations in a digital content distribution system configured such as shown in Fig. 15.

### DETAILED DESCRIPTION OF THE PREFERRED EMBODIMENTS

Preferred embodiments of a digital content distribution system and digital content distribution method according to the present invention are described in detail below, with references made to relevant accompanying drawings.

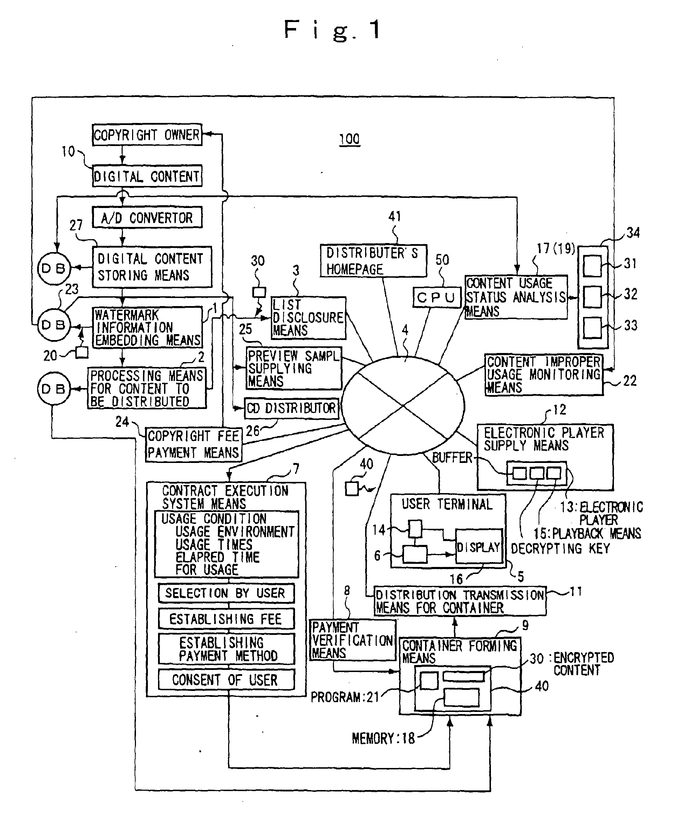

Specifically, Fig. 1 shows an example of the configuration of a digital content distribution system 100 according to the present invention.

The digital content distribution system 100 shown in Fig. 1 has
watermark information embedding means 1 for embedding at least one of copyright information, distributor's information and user information as watermark information in digital content 10 formed by digital information,
means 2 for processing content for distribution whereby encrypting digital content 20, into which is embedded watermark information, and by adding thereto at least one of conditions with regard to a form of the usage of the content and conditions with regard to a copyright fee,
a list disclosure means 3 for disclosing on a transmission path 4 a list of content, including one or a plurality of contents, in which watermark information has been embedded into digital information,
an access means 6 whereby a user accesses the content list via the transmission path 4 using a user terminal 5,
a contract execution system means 7 connected to the transmission path 4, which, in the case in which the user wishes to use a content 10 selected by the user, can be accessed by the user using the user's terminal 5 via the transmission path 4, whereupon between the distributor and the user, while referencing at least one of the usage environment established by the content predeterminedly established by the distributor for each one of the contents 10, the usage conditions, and the usage fee, with respect to the distribution of the contents, performing at least one of a registration of the name of the user of the content, selection of the usage environment and a selection of the usage conditions, and specifically performing an establishment of at least one of the usage fee, including copyright fee and a method of payment which should be determined by at least one of such usage environment and usage condition as selected.
a payment verification means 8, whereby, after establishing agreement in the contact execution means 7 as to a contract between the distributor and the user with regard to the distribution of the content 10, the distributor verifies whether or not the user has paid a contract fee,
a container forming means 9 for forming a container by further adding to the selected encrypted content 30 for distribution information with regard to at least one of the content usage environment and the content usage conditions, and the name information of the user, and further adding there to a content drive program based upon such content usage environment and the content usage conditions and a management program for managing the usage state of the content 10,
a distribution transmission means 11, which, in the case in which the distributor has verified that the user has made payment of the prescribed usage fee, by transfer to a priorly specified bank account, or by electronic payment, distributes the container 40 to the transmission path 4 via the distribution system,
an electronic player supply means 12, which prepares and supplies an electronic player 13, which includes a decryption key for playback of the container,
a downloading means 14 whereby the user priorly downloads to the user's terminal the electronic player 13,
a playback means 15, whereby the user uses the electronic player 13 to play back the distributed container 40, the electronic player 13 of which reading out part of the encrypted content 30, and playing back the part of the content as it decrypts same, the part thereof being deleted after playback, and another part of the content being read out therefrom and played back as it is decrypted, followed by deletion thereof after the end of playback, this process being repeated thereafter,
a content usage status analysis means 17 whereby for each playback of content in the container 40, either a playback status is directly transferring the play back status to a usage status analysis system 19 connected to the transmission path 4 or the content usage status is first temporarily stored into a storage means 18 provided within the container, and then transferred to the usage status analysis system 19 connected to the transmission path so as to manage recording of the usage status for each content,
a management program means 21 provided within the container, which, in the case in which an attempt is made to use the content 10 such that the content usage environment according to the contract conditions is violated or in which the content usage conditions will be violated, or the case in which an attempt of usage is made in violation of a pre-established warning, terminates the drive program within the container,
a content improper usage monitoring means 22, which constantly globally monitors operation via the transmission path 4 with regard to whether or not an attempt is being made to improperly use the content 10 and, in the case in which content resembling content that is suspected of improper usage is discovered, an executes an operation to identify whether or not the content includes digital watermark information and, if digital watermark information is detected, a makes a comparison with respect to the watermark information of each content in a content storage database 23 into which are stored contents 20 into which have been priorly embedded digital watermark information, and
a copyright fee payment means 24, which, in the case in which payment to the distributor for the prescribed content 10 has been received from the user, performs processing so as to pay a prescribed copyright fee to a copyright owner of the content, based on the copyright information of the distributed container 40,
wherein of the above-noted means, minimally the disclosing means 3 for disclosing the stored content 20 with an embedded digital watermark for distribution to the transmission path 4, the contract execution means 7, the container distribution transmission means 11, a user terminal means 5, a usage status analysis system means 17 and a content improper usage monitoring means 22 are connected to the transmission path 4, and wherein a computer 50 is caused to perform control thereof.

It is desirable that the transmission path 4 be a wide area network such as the Internet.

In a digital content distribution system according to the present invention, in the contract execution system 17, in the case in which there is a prescribed user is determined for a prescribed content 10, there are cases in which the watermark information embedding means 1 is used again for embedding user information into the watermark information.

By embedding user information into the digital content 10 to be distributed on the transmission path 4 in a form of watermark, even if the digital content 10 is misused in some way, it is easy to determine when and where a user made improper use of the content.

Additionally, in a digital content distribution system according to the present invention, it is desired that a pre-established warning be such that, for example, when a user of the content 10 continues to use the content 10 at the user terminal 5 in an off-line manner, under the scope of the usage conditions, a prompt is made so as to have the user to connect the usage thereof through the transmission path 4.

In a digital content distribution system according to the present invention, in the case in a distributor wishes to publicly sell digital content 10 created by a copyright owner, the digital content 10 is first received from the copyright owner and it is analog-digitally converted, after which it is stored in the digital content database 29 via a digital content storing means 27, the usage conditions for the digital content 10 being verified from the digital content copyright owner, these conditions being simultaneously stored into the digital content database 29.

The digital content 10 used in the present invention includes music information such as MIDI information, still picture information such as publications, photographs, maps, paintings, works of art, and character marks, and moving images such as videos and movies.

Additionally, it is desirable that the digital content 10 include a copyright mark, a privacy mark, or other public mark that indicates the origin of the content, and a mark indicating approval or certification by a prescribed public body.

In the digital content distribution system 100 according to the present invention, it is further desirable that the distributor, as a PR activity for the purpose of selling digital content 10 of various types that the distributor himself owns, discloses on the transmission path 4, via the disclosure means 3, a list of the distribution content 30, or discloses this list on a web page of the distributor.

It is also desirable that the digital content distribution system according to the present invention includes a previewing sample providing means 25, provided publicly on the transmission path 4, as a sample of at least part of a particular content 20, which is content (non-encrypted) stored in the database 23 into which watermark information has been embedded, this being approximately 20 seconds of music in the case in which the digital content is music.

It is also desirable that the digital content distribution system according to the present invention includes a previewing sample providing means 26, provided as stored on a prescribed storage medium, such as a CD, as a sample of at least part of a particular content 20, which is content (non-encrypted) stored in the database 23 into which watermark information has been embedded wherein the previewing sample being publicly distributed so that any user can play back the storage medium to listen the content through his user terminal.

The previewing sample can be distributed without charge, for example as a CD, onto which is recorded at least part of the content 20 stored in prescribed database 23.

In the case in which a user who has listened to the previewing sample on a terminal or listened to a CD installed on the user's terminal wishes to use this specific digital content, the user can, via the user's terminal, access the contract execution system means 7 and execute a prescribed contract.

When the user accesses the contract execution system means 7, a menu of the contents of the contract are displayed on a contract screen, enabling the user to select conditions which match the user's desires from the menu items displayed, and to automatically execute a contract between the distributor and the user.

That is, in the contract execution system means 7, as noted above, since the copyright fee and the distribution fee charged by the distributor decided based upon at least the copyright owner name or the digital content 10 usage condition, are registered and stored with respect to each one of the digital contents by the digital content processing means 2, from these conditions which the used has selected about each of the contents, the user first selects the usage environment conditions, such as personal use or commercial use, and selects the number of usages as either permanent usage, one usage, or a prescribed number of usages, or specifies the usage time as one week or one year, selection being made from a menu, in response to which an automatic calculation is made of the copyright fee and the charge for distribution, the overall cost being displayed.

The method of payment of the cost by the user is selected by the user from the menu.

If the user has finished selecting the method of payment with respect to a bank transfer destination and has agreed to the cost, the contract is automatically executed at this point.

At the distributor side, in accordance with the contract conditions, the container forming means 9 forms distribution container 40 by the selected distribution digital content 30 and the usage conditions and, after verification of receipt of payment from the user, the container 40 is distributed to the user via the transmission path 4.

Additionally, it is further desirable that the container 40 formed by execution of the contract execution means 17 in the present invention be distributed to the transmission path 4 via the distribution transmission system 11, and further contains a database forming means 34 that generates, from the information with regard to the analysis of the content 10 by the usage status analysis system 17, a user information management database 31, a product management database 32, and a sales database 33.

By using the above-noted databases, it is easy to obtain automatically marketing information such as information with regard to the degree of popularity of a prescribed content in the market, and what type of users like the content.

Another aspect of the present invention is a digital content distribution method having
a step of embedding into the digital content 10 a digital watermark which embeds at least one of copyright information, distributor information, and user information into the content,
a step of encrypting the content 10 to which the digital water mark has been embedded, and adding to the content 10 information with regard to at least one of the form of use of the content and information with regard to a copyright fee, so as to create content 30 to be distributed,
a step whereby the distributor publicly discloses, via a transmission path 4, a list of content including one or a plurality of contents, in which watermark information has been embedded into digital information,
a step whereby a user either accesses the content list via the transmission path 4, using the user's terminal 5, or downloads a preview sample and listens to part of the digital content 10,
a step whereby if the user wishes to use a content 10 selected by the user, the user accesses a contract execution system 17 connected to the transmission path 4 using the user's terminal 5 via the transmission path 4, whereupon between the distributor and the user, while referencing at least one of the usage environment, the usage conditions, and the usage fee these being previously established for each content by a distributor, at least one of registration of the name of the user of the content, selection of the usage environment, selection of the usage conditions, establishment of the usage fee, including copyright fee, which is established by the selected usage environment and by the selected usage conditions, and specification of the method of payment is performed,
a step after establishing agreement in the contract execution system 17 as to a contract between the distributor and the user with regard to the distribution of the content, whereby the distributor verifies whether or not the user has paid a contract fee,
a step whereby the distributor forms a container 40 by further adding to the selected content for distribution 30 (already encrypted) information with regard to at least one of the content usage environment, the usage conditions, and the name of the user, as well as a content drive program based upon the selected usage environment and the selected usage condition, and a management program for managing the usage state of the content,(at this stage the the content 40 for distribution being generated),
a step whereby, in the case in which there has been verification that the user has made payment of the prescribed usage fee to the distributor, by transfer into a priorly specified bank account, or by electronic payment, the container 40 is distributed to the transmission path 4 via the distribution system 11,
a step whereby an electronic player 13 including a decryption key for playback of the encrypted digital content 30 included in the container is prepared and supplied,
a step whereby the user priorly downloads an electronic player 13 including a decryption key for playback of the encrypted content 30 to the user's terminal,
a step whereby the user uses the electronic player 13 to play back the distributed container 40,
a step whereby the electronic player 13 reads out part of the encrypted content 30, and plays back the content as it decrypts same, the part being deleted after playback, and another part of the content being read out and played back as it is decrypted, followed by deletion thereof after the end of playback, this process being repeated thereafter,
a step whereby, at every time when each content 30 of the container is playbacked, either a playback status is transferring to a usage status analysis system 17 connected to the transmission path 4 by causing a management program included within the container 40 to operate via the transmission path 4 or the content usage status is first temporarily stored into a storage means provided within the container 40, and then transferred to a usage status analysis system 17 connected to the transmission path 4 followed by registration and management about the usage status of the respective container,
a step whereby in the case in which an attempt is made to use the content such that the content usage environment according to the contract conditions is violated or in which the content usage conditions will be violated, or the case in which an attempt of usage is made in violation of a pre-established warning, the management program provided within the container 40 terminates the drive program of the container,
a step whereby constant global monitoring operation is performed via the transmission path with regard to whether or not an attempt is being made to improperly use the content 10, and in the case in which content 10 resembling content 10 that is suspected of improper usage is discovered, an operation is executed to identify whether or not the content 10 includes digital watermark information and, if digital watermark information is detected, a comparison is made in that the detected digital watermark information is compared with each one of the watermark information of each content in a content storage database 23 into which is stored content into which has been priorly embedded digital watermark information,
a step whereby, in the case in which payment with respect to prescribed content has been received from the user by the distributor, processing is performed so as to pay a prescribed copyright fee to a copyright owner of the content, based on the copyright information of the distributed content 10, and
a step whereby a computer 50 controls at least one step of the foregoing steps.

In this method for distributing digital content, in the case in which there is a prescribed user for a prescribed content 10, it is desirable that there be an added step of incorporating user information into the watermark information.

In this digital content distribution method according to the present invention, when a user of the content 10 continues to use the content 10 at the user terminal 5 with off-line manner under the scope of the usage conditions, a pre-established warning is made so as to prompt the user to contact with the transmission path 4 to use the content in on-line manner.

In a digital content distribution method according to the present invention, it is further desirable that the container formed by execution of the contract execution system be distributed to the transmission path via the distribution transmission system, and it is desirable that this method further contains a step of generating, from the information with regard to the analysis of the content by the usage status analysis system, a user information management database, a product management database 32, and a sales database 33.

It is preferable that a digital content distribution method according to the present invention, further have a step which performs processing whereby, in the case in which the content includes a public mark that indicates that the content is of proper origin and when such public mark can be confirmed on the transmission line, the public mark part is clicked at the terminal or when the public mark is verified on the storage medium, the medium is brought to a improper usage monitoring center as an off-line manner, thereby the watermark information of the public mark part is detected, a comparison thereof with information of a content storage database being performed and, if the origin of the content is judged to be proper by coincidence with the information of the content storage database, a certification from the center is issued.

Additionally, it is desirable that the present invention have a further improper usage monitoring step performing processing whereby, if is not clear whether or not the origin of the content is proper, in the case in which the digital content is verified via the transmission path, if the public mark part is clicked at the terminal or in the case in which the public mark is verified on the storage medium, the medium is brought to the improper usage monitoring center as an off-line manner, thereby the watermark information of the digital content is detected, a comparison thereof with information of a content storage database being performed and, if the watermark information of the content to be tested is judged to be proper by coincidence with one of the watermark information of the content storage database, a certification from the center is issued.

It is desirable that the digital content distribution method according to the present invention have a further improper usage monitoring step performing processing whereby, in the case in which the content includes a public mark that indicates that the content is of proper origin, and when the public mark is confirmed on the transmission line, the public mark part is clicked at the terminal or when the public mark is verified on the storage medium, it is brought to an improper usage monitoring center through off-line manner, thereby the watermark information of the public mark part is detected, a comparison thereof with information of a content storage database being performed and, if the watermark information of the content to be tested is judged to be proper by coincidence with one of the watermark information of the content storage database, a certification from the center is issued.

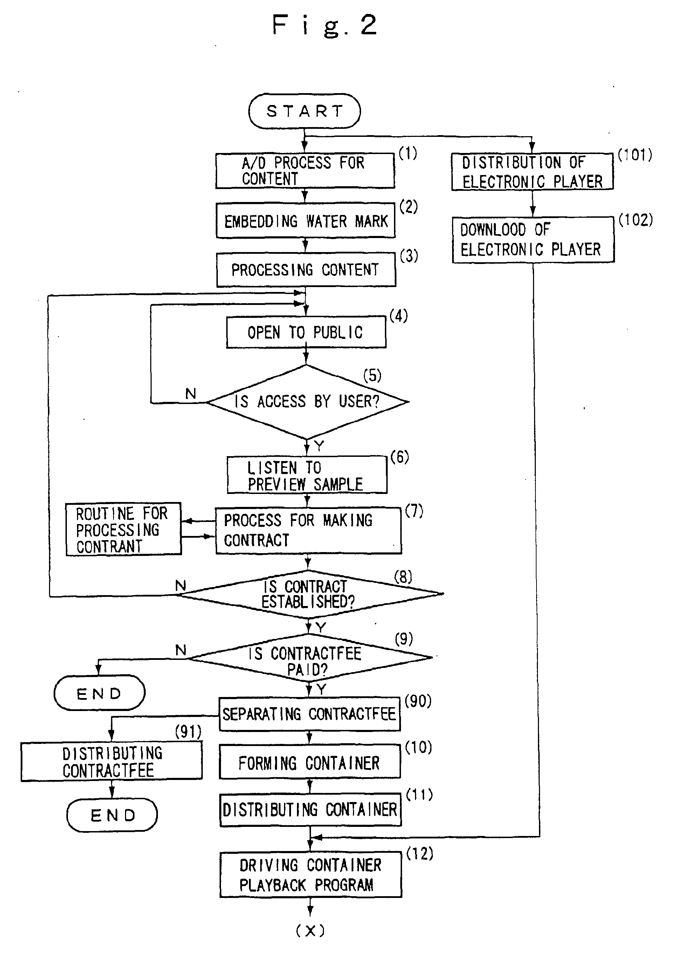

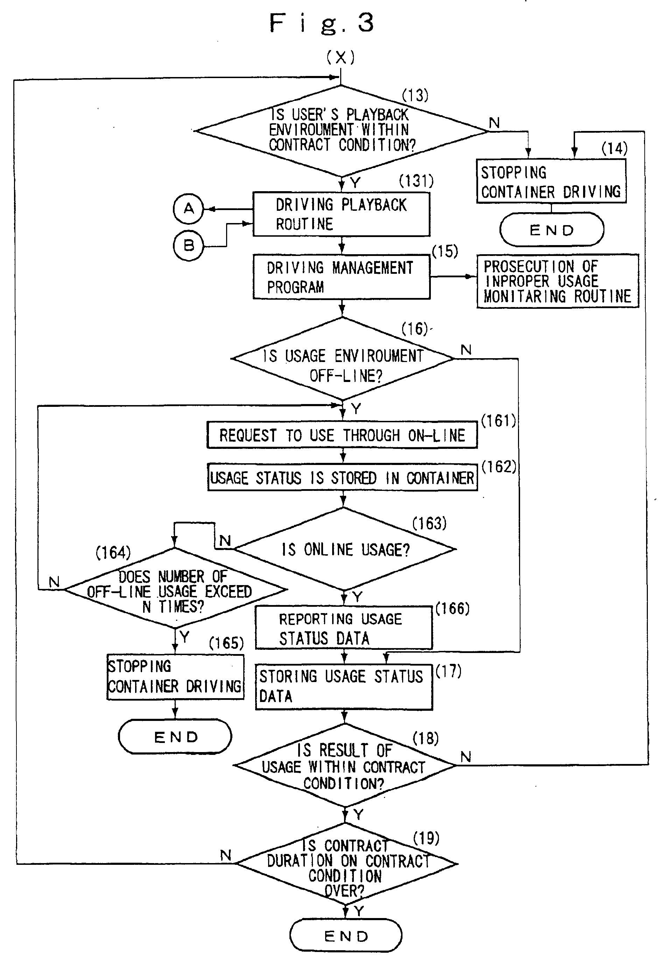

The operation procedure of a digital content distribution method according to the present invention is described below, with reference being made to the flowcharts of Fig. 2 and Fig. 3.

Specifically, after starting, at step S1 an operation of converting a prescribed work (content) made up of analog data to digital information is executed and, at step S2 digital watermark information including at least one of copyright information, distributor information, and user information is embedded in the content.

After the above is done, processing proceeds to step S3, at which a step is executed whereby the content, into which the digital watermark information has been embedded is encrypted, and the content is processed further by adding to it at least one of conditions with regard to content usage and conditions with regard to a copyright fee, thereby creating the content for distribution, this distribution content being then stored in a prescribed database.

Next, at step S4, a processing step is executed whereby a list of singular or multiple content stored in the database, in which watermark information has been embedded into digital information, is disclosed to public on a transmission path. At step S5, a processing step is executed whereby a judgment is made as to whether or not a user has executed from the user's terminal via the transmission path an operation to access the list of contents for distribution. If the result of this judgment is NO, return is made to step S4 and the above-noted processing is repeated. If the result is YES, however, at step S6 after the user, if necessary, performs previewing, processing proceeds to step S7, at which, in the case in which the user likes the prescribed distribution content and wishes to view or listen the content, a contract processing routine is used to execute a contract processing operation.

At step S8, if a contract is not established, that is, if the result at step S8 is NO, return is made to step S4, and the above-noted processing steps are repeated.

If the result at step S8 is YES, however, that is, if a contract is established between the content distributor and the user, processing proceeds to step S9, at which the content distributor makes a judgment as to whether or not the user has paid a prescribed contract fee and, if the result of the judgment is NO, the flow proceeds to END. If the result at this step is YES, however, at step S90 this contract fee is divided into prescribed items, and at step S91 after distribution to a prescribed payment account, processing proceeds to step S10, at which the distributor forms a container by further adding to the selected content for distribution information with regard to at least one of the content usage environment, the content usage conditions and the name of the user, as well as a content drive program based upon the content usage environment and the content usage conditions and a management program for managing the usage state of the content.

After the above processing, at step S11, a processing step is executed whereby, in the case in which the container distributor has verified that the user has paid the prescribed contract fee, the container is distributed to the user via the transmission path.

Next, at step S12, the user, using an electronic player priorly distributed to the transmission path at step S101 and priorly downloaded by the user at step S102, performs an operation of causing the electronic player to play back the distributed content.

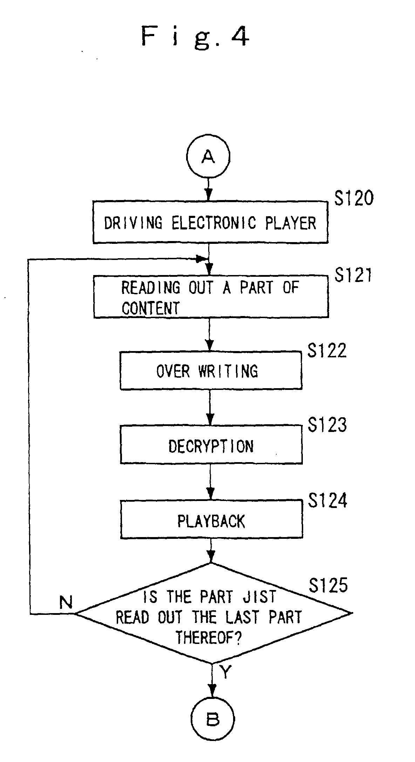

First, at step S13 a judgment is made as to whether or not the user's playback operation environment for the distributed container satisfies the playback conditions within the range established by the contract. If the result of this judgment is NO, at step S14 after a prescribed warning, the drive circuit of the distributed container is placed in a condition in which it cannot operate, and the processing proceeds to END. If the result at step S13 is YES, however, at step 131 the playback routine as shown in Fig. 4 is executed.

First, at step S120 after executing an operation that causes drive of the electronic player, at step S121 an encrypted partial digital data of a prescribed size is read out by the electronic player from the distributed content and, at step S122 this is temporarily stored into a buffer or the like, the encrypted partial digital data read out on the previous operation being overwritten thereby, so as to delete the data read out the previous time.

Next, processing proceeds to step S123, at which the current read out encrypted partial digital content stored in the buffer is decrypted by the decryption key of the electronic player, and at step S124 the decrypted digital content is played back as normal audio or video information.

At step S125, a judgment is made as to whether or not all the decrypted partial digital content has been read out and decrypted from the container. If the result of this judgment is NO, return is made to step S121 and the above processing steps are repeated until all of the digital content has been decrypted.

If the result at step S125 is YES, however, the judgment is made that all the digital content included in the container have been played back, at which point the playback routine is ended, with return being made to step S15.

At step S15, a usage status management program of the distributed container is started, and at step S16 a judgment is made as to whether or not the container usage is on-line. If the result of this judgment is YES, the processing proceeds directly to step S17 described below. If the result is NO, however, that is, if the result is that the container was being used off-line, at step S161 a request is made to the user to execute playback of the distributed container on-line, and at step S162 usage status data of the distributed container is stored in an appropriate storage means provided within the distributed container.

After the above, at step S163 a judgment is made as to the next usage condition of the distributed container by the user, and if the result of the judgment is YES, that is, if the usage was on-line, at step S166 notification is given of the container usage status data that had been stored up until then in the storage means within the distributed container, via the transmission path, to a usage status analysis means such as shown at step S17.

If the result of the judgment at step S163 is NO, however, at step S164 a judgment is made as to whether the number of off-line playback operations with respect to the distributed container has exceeded N (for example 3 times) and, if the result of this judgment is NO, return is made to step S16, from which the above processing steps are repeated. If the result at step S163 is YES, however, processing flow proceeds to step S175, at which the distributed container drive program is stopped, and the processing reaches END.

At step S17, for each content sent from the container, an operation is executed to record the usage status.

At step S18, if an attempt is made to use the content in a usage environment that violates the contract conditions with respect to the content, or an attempt is made to use the content under conditions violating the environment conditions of the content, or an attempt is made to use the content beyond the usage conditions, or usage is attempted in violation of a pre-established warning, a management program provided within the container stops the drive program of the container.

While not shown in the flowcharts of Fig. 2 and Fig. 3, concurrently with step S17, a program that drives an improper usage monitoring means is constantly being executed, and performs constant global monitoring, via the transmission path, of whether content is being improperly used. If content resembling content that is suspect of improper use is discovered, an operation is performed to identify whether the content includes watermark information. In the case in which watermark information is detected, a comparison is made with each content watermark information of a content storage database into which is stored content into which watermark information is priorly embedded.

After the above, processing flow proceeds to step S19, at which a judgment is made as to whether or not the distributed container playback conditions satisfy the contract completion, and if the result of this judgment is NO, return is made to step S12, from which the above processing steps are repeated. If the result at step S19 is YES, however, the program proceeds to END.

Another aspect of the present invention is a storage medium onto which is stored a program for the purpose of performing at least part of the following processing steps by a computer which including;
a step of embedding into the digital content a digital watermark which embeds at least one of copyright information, distributor information, and user information into the content,
a step of encrypting the content and adding to the content information with regard to the form of use of the content and information with regard to a copyright fee, so as to create content to be distributed,

Specifically, a first aspect of the present invention is a method for distributing content formed by digital information, this method having
a step of embedding at least one of copyright information, distributor information, and user information into the digital content as a digital watermark,
a step of encrypting the content into which such digital water mark has been embedded and adding to the content information with regard to either one of the form of use of the content or information with regard to a copyright fee, so as to create content to be distributed,
a step whereby the distributor publicly discloses, via a transmission path, a list of content, including one or a plurality of the contents, in each of which watermark information has been embedded into digital information,
a step whereby a user accesses the content list via the transmission path, using the user's terminal,
a step whereby if the user wishes to use a content selected by the user, the user accesses a contract execution system connected to the transmission path using the user's terminal via the transmission path, whereupon between the distributor and the user, while referencing at least one of the usage environment predeterminedly established by the distributor for each one of the contents, selected from the usage conditions and the usage fee, with respect to the distribution of the contents, performing at least one of a registration of the name of the user of the content, selection of the usage environment and a selection of the usage conditions, and specifically performing an establishment of at least one of the usage fee, including copyright fee and a method of payment which should be determined by at least one of such usage environment and usage condition as selected.
a step after establishing agreement in the contract execution system as to a contract between the distributor and the user with regard to the distribution of the content, whereby the distributor verifies whether or not the user has paid a contract fee,
a step whereby the distributor forms a container by further adding to the selected encrypted content for distribution information with regard to at least one of the content usage environment and the content usage conditions, and the name of the user, and further adding there to a content drive program based upon such content usage environment and the content usage conditions and a management program for managing the usage state of the content,
a step whereby, in the case in which at the distributor there has been verification that the user has made payment of the prescribed usage fee, by transfer into a priorly specified bank account, or by electronic payment, the container is distributed to the transmission path via the distribution system,
a step whereby an electronic player including a decryption key for playback of the container is prepared and supplied,
a step whereby the user priorly downloads an electronic player to the user's terminal,
a step whereby the user uses the electronic player to play back the distributed content,
a step whereby the electronic player reads out a part of the encrypted content, and plays back the part of the content as it decrypts same, the part thereof being deleted after playback, and another part of the content being read out therefrom and played back as it is decrypted, followed by deletion thereof after the end of playback,this process being repeated thereafter,
a step whereby, at every time when each content included in the container being playbacked, either a playback status is directly transferred to a usage status analysis system connected to the transmission path by causing the management program included within the container to operate, or the content usage status is first temporarily stored into a storage means provided within the container, and then transferred via the transmission path, to a usage status analysis system connected to the transmission path, so as to manage recording of the usage status for each content,
a step whereby in the case in which an attempt is made to use the content such that the content usage environment according to the contract conditions is violated or in which the content usage conditions will be violated, or in a case in which the content is used under a condition exceeding the pre-established condition or in a case in which an attempt of usage is made in violation of a pre-established warning, the management program provided within the container terminates the drive program of the container,
a step whereby constant global monitoring operation is performed via the transmission path with regard to whether or not an attempt is being made to improperly use the content, and in the case in which content resembling to a content that is suspected of improper usage is discovered, an operation is executed thereto to identify whether or not the content includes digital watermark information and, if digital watermark information is detected, a comparison is made with respect to the watermark information of each content to have been detected, in a content storage database into which are stored contents into which has been priorly embedded digital watermark information,
a step whereby, in the case in which payment to the distributor of a usage fee for the prescribed content has been received from the user by the distributor, processing is performed so as to pay a prescribed copyright fee to a copyright owner of the content, based on the copyright information of the distributed content.

By adopting the above-noted technical constitution, a digital content distribution method or digital content distribution method according to the present invention, in publicly marketing digital content having copyright, it is possible to configure a system in which it is not possible for a user purchasing the digital content to make improper use thereof, such as would be in violation of the copyright thereof, and possible to configure a system in which, should a user make improper use such as would violate a copyright, it is possible to securely prosecute that use, thereby not only enabling not only simple distribution of digital content, but also reliable protection of the copyright of the digital content, enabling proper payment of a copyright fee to the copyright owner, and also enabling almost completely automated processing.

A preferred embodiment of a digital content distributed container and electronic player for playing back the digital content, according to the present invention, are described below.

Specifically, this embodiment is a container distributing digital contents and electronic player.

More specifically, this embodiment is a container distributing digital content used in a digital content distribution method and digital content distribution system for content formed by digital information, and an electronic player for playing back digital content stored in the digital content distributing container.

In past, in a digital content distribution system such as noted above, because there was a digital content transport means and transport method for distribution over a transmission path, configured so as not to enable reliable protection of the copyright, and because there was no electronic player built into the digital content distributed via the transmission path, it was not possible to effectively use this distribution system.

According, to improve on the above-noted drawbacks present in the past, this embodiment provides a distributed container that, when electronically marketing digital content having a copyright via a transmission path, can prevent improper use by a user who purchases the content that would violate the copyright, and in the case in which a user makes improper use that violates the copyright, enables reliable prosecution of this use, and a further provides an electronic player, which can decrypt encrypted digital content from within the distributed container and play the content back in a manner that prevents externally revealing the digital content.

Specifically, a first aspect of this embodiment is a digital content distributing container, which is distributed on a transmission path, this container having
a storage means for storing digital content that has been priorly encrypted by an encryption means,
an output means for outputting the digital content to the outside,
a container driving means for outputting the digital content from the storage means to the external output means,
a usage conditions storage means for storing at least one of a usage environment and usage condition of the digital content,
a digital content usage status verification means including at least one of a digital content environment judgment means, a number of usage times counter means, which counts the number of usage times each time digital content is used, a clock means, and a time counter means, which counts the amount of elapsed time after distribution of the distributed container,
an operating means, which is operated by a user when the user using the digital content, and
a container drive control means, which
   in the case in which the user operates the operating means in order to use the digital content, if the usage of the digital content is within usage conditions for the digital content stored in the usage conditions storage means, causes the container driving means to operate, so as to use the digital content, and
   in the case in which the usage of the digital content violates the digital content usage conditions stored in the usage conditions storage means, causes the container driving means to stop, and also transfers to a separately provided digital content usage conditions analysis means the usage status of the digital content each time the user uses the digital content.

A second aspect of this embodiment is an electronic player having
a input means connected to the digital content distributed container,
a buffer means, which reads part of the encrypted digital content from a digital content storage means provided in the digital content distributing container and temporarily stores this digital content therein,
a decryption key storage means, which stores a decryption key for decrypting the encrypted digital content,
a decrypting means, which uses the decryption key to decrypt the part of the encrypted digital content stored in the buffer means, so as to obtain the original digital content,
a playback means, which plays back the part of the decrypted digital content, and
a control means, which controls the foregoing means.

That is, by adopting the above-noted constitution, in an on-line system for distributing digital content including prescribed copyright information to a user who wishes to use such content, via a transmission path comprising a wide area network such as the Internet, the distributed container and electronic player according to this embodiment prevent improper use of the digital content, and effectively avoid violation of the copyright of the digital content, and furthermore, by also using an electronic player that can perform playback of the digital content in a condition in which the digital content is not revealed at all to a third party, it is possible to automatically and efficiently operate a distribution system for digital content using a transmission path of the past.

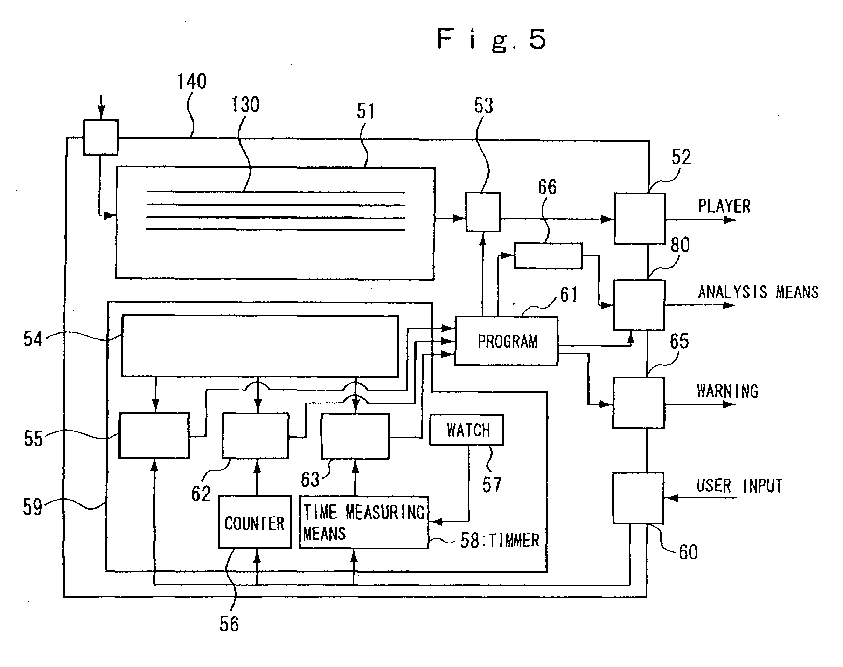

A specific example of a distributed container and an electronic player according to this embodiment of the present invention is described below, with reference made to Fig. 1 and Fig. 5.

Specifically, Fig. 5 is a block diagram showing the configuration of an example of a distributed container 140. This drawing shows a distributed container 140 for distribution of digital content on a transmission path, this container having
a storage means 51 for storing digital content 130 that has been priorly encrypted by an encryption means,
an output means 52 for outputting the digital content to the outside,
a container driving means 53 for outputting the encrypted digital content 130 from the storage means 51 to the external output means 52,
a usage conditions storage means 54 for storing at least one of a usage environment and usage condition of the encrypted digital content 130,
a digital content usage status verification means 59 including at least one of a digital content environment judgment means 55, a number of usage times counter means 56, which counts the number of usage times each time the encrypted digital content 130 is used, a clock means 57, and a time counter means 58, which that counts the amount of elapsed time after distribution of the distributed container 140,
an operating means 60, which is operated by a user when using the encrypted digital content 130, and
a container drive control means 61, which
   in the case in which the user operates the operating means 60 in order to use the encrypted digital content 130, if the usage of the encrypted digital content 130 is within usage conditions for the encrypted digital content 130 stored in the usage conditions storage means 54, causes the container driving means 53 to operate, so as to use the encrypted digital content 130, and
   in the case in which the usage of the encrypted digital content 130 violates the digital content usage conditions stored in the usage conditions storage means 54, causes the container driving means 53 to stop and also transfers to a separately provided digital content usage conditions analysis means 17 the usage status of the encrypted digital content 130 each time the user uses the digital content 130.

Note that the encrypted digital content 130 corresponds to the encrypted digital content 30 as shown in Fig. 1 based upon an original digital content 10 as shown in Fig. 1.

An example of the configuration of a digital content distribution system using the above-noted digital content distributed container 140 is shown in Fig. 1.

The distributing container 140 in this embodiment has the above-described configuration, and is formed by adding to the encrypted content 130, at least one of the name of an agreeing user who agrees with using such digital content, the selected usage environment, and usage conditions, as well as a content 140 drive program based upon at least one of the selected usage environment or the selected usage conditions and a management program for managing the usage status of the content.

In the distributed container 140, it is desirable that for each playback of the content 130, the playback status thereof is either directly transferred, via the transmission path 4, to a usage status analysis system 17 connected to the transmission path 4, by causing a management program distributed within the container 140 to operate, or first temporarily transferred to a storage means provided within the container 140 and then transferred to a usage status analysis system 17 connected to the transmission path 4 via the transmission path 4, so as to manage recording of the usage conditions for each content. It is also desirable that, in the case in which an attempt is made to use the content 10 in a usage environment that violates the contract conditions with respect to the content 10, or an attempt is made to use the content 10 under conditions violating the environment conditions of the content 10, or an attempt is made to use the content 10 beyond the usage conditions, or usage is attempted in violation of a pre-established warning, the management program provided within the container stops the drive program of the container 140.

Additionally, it is desirable that, in the distributed container 140 in the present invention, the digital content usage status verification means 59 include one of a usage environment judgment means 57, which makes judgment as to whether the environment in which the container is being used coincides with the usage environment permission conditions of the digital content stored in the usage conditions storage means 54, a counter means 56 for counting the number of usages, and a number of usage times judgment means 62 for performing a comparison with the number of usage times conditions for the digital content stored in the usage conditions storage means, and a usage elapsed time judgment means 63, which judges whether the elapsed time output from an elapsed time counting means 58 that counts the time elapsed from the time at which the container is distributed until the current time, via the clock means 57, conforms to the usage time conditions of the digital content stored in the usage conditions storage means 54.

It is desirable that the container drive control means 61 have a function 65 which, in the case in which a judgment is made from any of the usage environment judgment means 55, the usage number of times judgment means 62, and the usage elapsed time judgment means 63 that the usage of the digital content does not coincide with the priorly established usage conditions of the digital content, performs control of the container driving means 53 so as to stop the container drive, and report the results to the user.

It is also desirable that the container drive control means 61 have a function which, in the case in which the usage of the digital content by the user is off-line, temporarily stores at least part of usage environment information, usage number of times information, and usage time information in a separately provided auxiliary storage means 66, a message output function 65 that makes a warning to the user so as to execute the next usage of the digital content on-line, and a function which, in the case in which the user is executing the digital content on-line, transfers the information stored in the auxiliary storage means 66 to the digital content usage status analysis means 17.

It is desirable that the container driving means 61 have a function whereby, when the user has used the digital content off-line and after a prescribed warning had been generated to the user, and a prescribed amount of time has elapsed, or in the case in which there is no son-line usage after a subsequent usage or after a prescribed number of time of the usage thereof, a warning instruction is issued to the container driving means 53 to stop the drive.

That is, the distributed container 140 according to the present invention has a container driving control means 61 having a function performing control, whereby, in response to a digital content storage means 51 into which is stored digital content 30 encrypted in accordance with pre-established encryption means, a usage conditions storage means 54 into which is stored usage conditions contracted for between the user and the container distributor, and input of usage input command information from the user, a judgment is made as to whether or not the usage of the digital content by the user is within the usage conditions contracted for between the user and the container distributor and, in the case in which it is judged that usage is within the usage conditions, output of the digital content is permitted, but in the case in which it is judged that the usage is beyond the usage conditions, the output of the digital content is not permitted, and further in the case in which usage of the digital content is permitted, usage information is transferred to a separately provided digital content usage status analysis means 17, via the transmission path.

In the case in which there is an attempt to use the digital content 10 in violation of the usage environment conditions of the digital content 10 according to the contract for the content 10, or in the case in which usage is attempted that would violate the usage conditions of the content 10 or usage is attempted beyond the usage conditions or in violation of a pre-established warning, the management program means 21 provided in the control means 61 provided in the container 140 has a function that places the driving program in the container in the stopped condition.

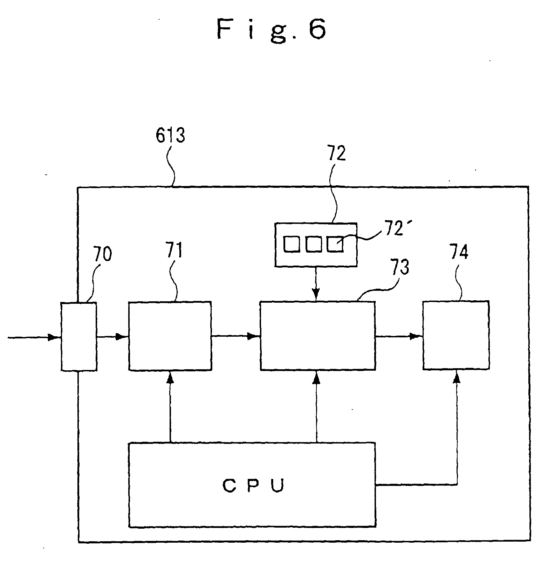

Next, the electronic player 613 used for the distributed container 140 in the present invention is described in detail below, with references made to Fig. 6.

Specifically, as shown in Fig. 6, the electronic player 613 has an input means 70 connected to the digital content distributed container 140, a buffer means 71 which outputting a part of the digital content 30 from a encrypted digital content storage means 51 provided in a digital content distributing container 140 and, temporarily storing encrypted digital content 30 therein, a decryption key storage means 72 for storing a decryption key that decrypts the encrypted digital content 130, a decryption means 73 for decoding the original digital content from part of the encrypted digital content stored in the buffer means 71, using the decryption key 72' stored in the decryption key storage means 72, a playback means 74 for playing back the part of the decrypted digital content, and a control means 75 for controlling the above-noted means.

More specifically, in terms of the operation of the electronic player 613 according to the present invention, this operation has
a step of reading out part of the digital content from the encrypted digital content storage means 51 provided in the digital content distributing container 140, and, via the input means 70 storing this digital content temporarily in the buffer means 71,
a step of using the decryption key 72' stored in the decryption key storage means 72 that decrypts the part of the encrypted digital content 130 decrypting a part of digital content, so as to obtain the original digital content,
a step of playing back the part of the decrypted digital content,
a step of readout out another part of the digital content 130, from the encrypted digital content stored in the digital content storage means 51 and storing this part in the buffer means,
a step of, with using the decryption key72' stored in the decryption key storage means 72, decrypting this another new part of the encrypted digital content 130 which is stored in the buffer means 71, so as to obtain the original digital content,
a step of playing back the new part of the decrypted digital content,
a step of repeating the above-noted processing steps, until all the parts of the encrypted digital content storage means 51 provided in the digital content distributing container, have been played back,
a step of deleting data that has already been processed, in any one of the step of storing the digital content into the buffer means 71, the decrypting step or the playback step, by overwriting the data with the next input data, or using a separately provided data deleting means to achieve this purpose.

It is desirable that the electronic player 613 according to the present invention be disposed within the transmission path and be configured so that it can be downloaded by a user to the user's terminal, either with or without charging of a fee.

By adopting the above-described technical constitution, the distributed container and electronic player of the present invention, in publicly marketing copyright digital content via a transmission path, a distributing container is provided which prevents a user who purchased a digital content from making improper actions that would violate the copyright thereof, and it is possible not only to provide a digital content distributing container whereby, in the case in which there is an improper usage by the user that, for example, violates the copyright, it is possible to reliably prosecute this usage, but also to provide an electronic player which decrypts encrypted digital content stored in the distributed container and can playback the digital content so they are not externally revealed.

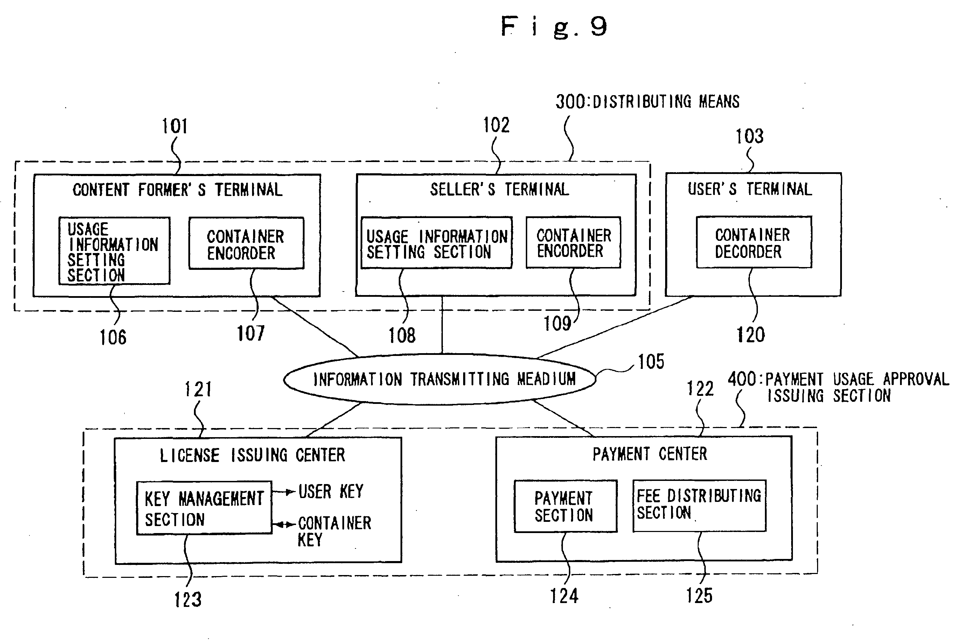

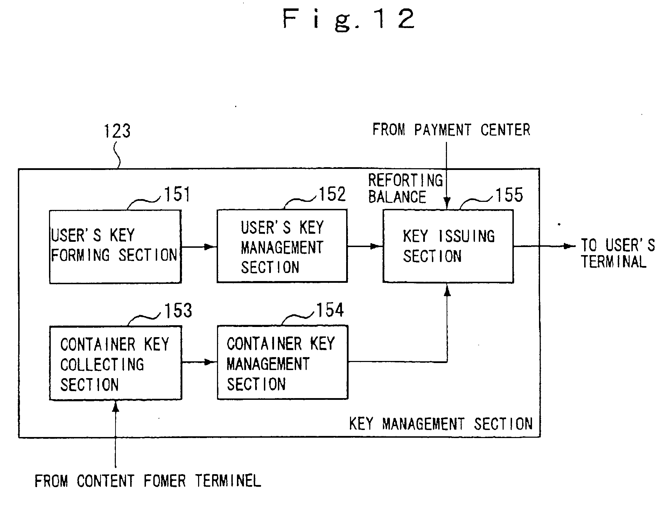

A specific example for the purpose of preventing improper used of digital content according to the present invention is described below, using the method of a digital watermark, making reference to Fig. 9 to Fig. 16.

Although the digital watermark has gained attention in recent years as a method, about which there have been various ideas proposed with regard to the method of embedding thereof, embedding systems, and techniques for extracting an embedded watermark, there has been no thought given with regard to a system for prosecution of improper use of an embedded watermark.

In a super distribution system using encrypting technology, the conditions imposed in using digital content are only with regard to billing for a code key, and make no provision for preventing improper use after billing. For this reason, if some sort of limit is not placed on the use of digital content, a user can purchase a code key and replicate or edit the digital content at will, enabling such improper use as re-selling of the content. For this reason, in super distribution systems of the past, even if a code key is purchased, it was necessary to limit the use of the digital content, and it was not possible to provide digital content to accommodate various types of user needs.

Additionally, if a purchased key is distributed to a third party, it is possible to obtain the digital content without a charge, the third party being able to use the key to use the digital content. That is, in a super distribution system, all that is done is billing with respect to the primary user, without any strict copyright protection.

This example was devised with consideration to the above situation, and provides an overall system in which an digital watermark is used to provide copyright protection for digital content distributed on a network.

This example of the present invention enables reliable prevention of improper use of digital content in a super distribution system.

Additionally, this example of the present invention enables relaxation of the usage limitation placed on digital content in a super distribution system, enabling use of the digital content in a variety of forms, and also enables prosecution of improper use thereof.

A content distribution system according to this example has
a watermark embedding means 107 for embedding identification information into digital content as an digital watermark,
an approval/denial information management means 106' for managing information with regard to approval or denial of placing the digital content on a web page,
a content searching means 114 for searching the web page and obtaining digital content residing on the web page,
a digital watermark extraction means 115 for obtaining embedded identification information as a digital watermark from the above-noted obtained digital content, and
an improper use detection means 116, which compares identification information extracted from the digital content with information managed by the approval/denial information management means 106' so as to detect improper use of the digital content.

For example, the approval/denial information management means 106' minimally manages identification information of digital content showing whether the digital content had been approved for placing same on a web page or not, and the improper use detection means 114 compares the identification information extracted from the digital content with the identification information managed by the approval/denial information management means 106', so as to detect improper use of the digital content.

The approval/denial information management means 106' manages and mutually associates the identification information of digital content, which has either been approved or denied for placing the digital content on a web page, and resource information representing a web page onto which placing of the digital content has either been approved or denied, and the improper use detection means 116 compares the identification information extracted from the digital content, resource information representing the web page destination, with identification information and resource information managed by the approval/denial information management means 106', so as to detect improper usage of the digital content.

In another aspect of this example of the present invention, a improper use notification means 117 is provided which makes notification of the detection results from the improper use detection means 116.

In this case, it is possible for the improper use notification means 117 to record the detection results from the improper use detection means 116 in HTML format, and to disclose this HTML file on a web page.

The above-noted HTML file can include resource information representing the web page that is the detection destination of improper use of the digital content.

Yet another aspect of this example of the present invention is a content distribution system that bills for use of obtained digital content, this system having
distribution means 101 and 102 for distributing encrypted digital content,
a usage means 103 for receiving and using the provided digital content, and
a billing and usage approval issuing means 400 for billing a user a usage fee for the digital content, and for issuing a unique encrypting key for each digital content, with the prerequisite of payment of the usage fee, so that this content distributing system requires the user who used the obtained digital content a certain amount payment,
wherein the billing and usage approval issuing means 400 not only issues a encrypting key for each digital content, but also issues a user's unique key for each user using the digital content, so as to limit usage to the case in which there is both the code key and the user key.

Yet another aspect of this example of the present invention is a content distribution system that bills for use of obtained digital content, this system having
a usage information setting means 106 for setting an application for which either approval or denial of use, of various applications, including pasting of the digital content into a web page,
an approval/denial information management means 106' for managing information with regard to approval or denial of placing the digital content on a web page,
a usage limiting means 500, which uses not only an unique encrypting key for each encrypted content but also an user's unique key for each use using the digital content, so as to limit usage of the digital content,
a watermark embedding means 600 for embedding digital content identification information as a digital watermark into the digital content,
a content searching means 114 for searching the web page and obtaining digital content residing on the web page,
a digital watermark extraction means 143 for extracting the identification information embedded as a digital watermark into the digital content from the digital content, and
an improper use detection means 116, which compares identification information extracted from the digital content with information managed by the approval/denial information management means 106' so as to detect improper use of the digital content.

A content distribution method according to this example of the present invention performs management of information with regard to approval and denial of pasting of onto a web page residing on a network, the web page being searched so as to obtain the digital content thereon, and the identification information of the digital content embedded as a digital watermark therein being extracted from the obtained digital content, the extracted identification information and above-noted managed information being accessed so as to detect improper use of the digital content.

In another aspect of this example of the present invention, in a content distribution system that bills for use of obtained digital content, not only an unique encrypting key for each encrypted digital content, but also an user's unique key for use user are used to limit usage of the digital content.

In another aspect of this example of the present invention, in a content distribution system that bills for use of obtained digital content, an application for which either approval or denial of use, of various applications, such as pasting of the digital content into a web page is set, and information with regard to approval or denial of use of placing the digital content on a web page is managed, wherein not only an unique encrypting key for each encrypted content by also an user's unique key for each user using the digital content are used to limit the usage of the digital content, and further wherein the above-noted web page is searched to obtain the digital content on the web page, identification information of the digital content embedded therein as a digital watermark being extracted from the digital content, and the extracted identification information and above-noted managed information being accessed so as to detect improper use of the digital content.

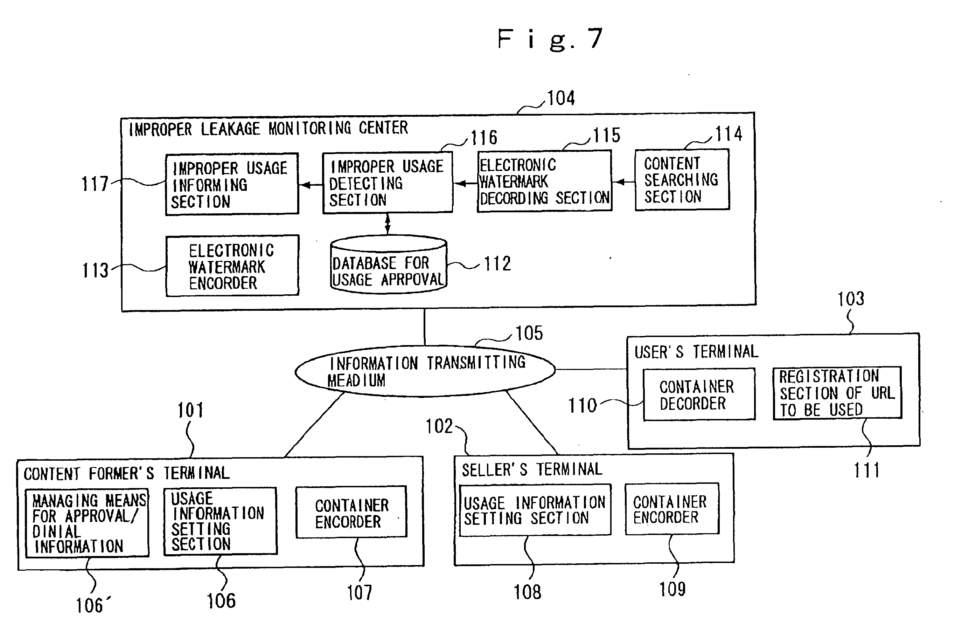

The overall configuration of a content distribution system according to the first embodiment of this example of the present invention is shown in block diagram form in Fig. 7.

In Fig. 7, the reference numeral 10 denotes a content generation terminal used by a creator of digital content (hereinafter sometimes referred to simply as content), 102 is a sales shop terminal used by the sales shop or the like in distributing the content, 103 is a user terminal used by a user or the like who receives and uses the content, 104 is an improper disclosure monitoring center that monitors improper disclosure of the content, 105 is a network such as the Internet or an information transmission medium comprising a recording medium such as a CD-ROM or a floppy disk.

In a content distribution system according to this embodiment, the content creator terminal 101, sales terminal 102, user terminal 103 and improper disclosure monitoring center 104 are configured so as to enable exchange of various information, to be described below, via an information transfer medium, such as the Internet or a CD-ROM. Although for the purpose of the drawing only one each of the content creator terminal 101, sales terminal 102, and user terminal 103 are shown, it will be understood that these can each be a plurality of terminals.

The content creator terminal 101 has a usage information setting section 106 and a content encoder 107. The usage information setting section 106 sets information representing a range of use for a user receiving the content when the content is provided by a content creator or the like. This approved usage information includes, for example, limitation information such as the period during which use is possible, the number of uses, and the overall time of usage, price information such as a copyright fee, and application information, such as would limit the application using the content. The application information minimally includes display or playback only of the content, and permission to place the content on a web page (web site). The copyright fee can be set for each of these applications individually.

The container encoder 107 performs processing that incorporates the produced content and approved usage information required for use of the content into a single file, which is referred to as the container. Content on the information transfer medium 105 is not distributed as is, but in the form of a container. Although it is not shown in the drawing, it will be understood that it is possible to encrypt the content using a code key, the encrypted content and the approved usage information being formed into a container.

The sales location terminal 102 has a usage information setting section 108 and a container encoder 109. At a sales location, a container produced by a content creator terminal 101 is received, and displayed on a web page from which it can be downloaded by a user. It is alternately possible to distribute the content off-line, using a recording medium such as a CD-ROM, and the sales location can also advertise the container being distributed.

The usage information setting section 108 of the sales location terminal 102 sets fees for various services for sales. The container encoder 109 incorporates a container produced at a content creator terminal 101 and the above-noted fees and the like into a single file, and further produces a container. Although the example described herein is one in which the copyright holder and the sales location are different, it is also possible for the copyright holder himself to sell the container, in which case the sales location terminal 102 is not necessary.

The user terminal 103 has a container decoder 110 and a used URL storage section 111. The container decoder 110 performs prescribed processing with respect to a received container that has been distributed from a content creator or sales location, so as to perform conversion thereof, enabling use of the content contained therein, to which has been added information such as approved usage information and sales fees. When this is done, the user access the approved usage information included within the container and determines what application is to be used in using the content.

For example, in the case in which the content is encrypted, decryption is performed at the container decoder 110. In order to perform this decryption, it is necessary to have a code key, which is purchased by the user. In this case, the acquisition of the container itself can be made free of charge. In the case in which the content is not encrypted, it is possible to distribute the container upon payment of a fee in accordance with the application.

The used URL storage section 111, in the case in which the user will use the content by placing it on a web page, stores in the improper usage monitoring center 104 information with regard to what content is to be placed on what web page (for example, identification information for the content to be placed on the web page, and a URL (universal resource locator) which is the resource location of the web page). This information is stored and managed within the improper usage monitoring center 104 as an approved usage database 112.

The approved usage information set by the usage information setting section 106 of the content creator terminal 101 is also stored, held, and managed in the approved usage database 112. That is, the improper usage monitoring center 104 receives from the content creator terminal 101 identification information of content into which is coded approval for placement onto a web page as approved usage information, this being information with regard to what content is to be placed on what web page, and stores this information into the approved usage database 112.

In addition to the above-noted approved usage database 112, the improper disclosure monitoring center 104 has a digital watermark encoder 113, a content searching section 114, a digital watermark decoder 115, an improper usage detection section 116, and an improper usage notification section 117. The digital watermark encoder 113 receives content produced by the content creator and performs processing that returns the content with an embedded digital watermark. Therefore, content within a container distributed between the content creator terminal 101, the sales location terminal 102 and the user terminal 103 has a digital watermark embedded therewithin. This embedded digital watermark is, for example, a unique content ID for identifying the content.

The content searching section 114 crawls the Internet so as to automatically download a content file placed on a web page. That is, of data files of various types placed on web pages, copyright content files containing an image or music are searched for and downloaded. These content files can be identified, for example, by examining the extensions of the file names.

The content searching section 114, for example, comprises a software module (agent), which makes an independent judgment as to what to process. That is, the agent of the content searching section 114 is resident at a web site on the Internet, and automatically downloads content files placed thereat, and when processing is completed at one web site, transfers in sequence to the next web set and performs processing to download content files therefrom.

When the above is done, the movement between web sites is done by means of links placed on each web site. That is, at first movement is made to an initially set web site and downloading is performed of content files therefrom, after which links place on each web site are sequentially followed to other web site. In doing this, the path of URLs searched is kept as a history, so that repetitive searching of already-searched web sites is not done.

When following links in this manner to sequentially search the Internet, in the case in which all the URLs of links at the next web site exist within the URL history, the searching of web pages on the Internet ends. In this case, return is made to the initially set web site, from which content files are automatically download thereafter in the same manner.

Because of the extremely large number of web pages on the Internet, a large amount of time is required to crawl all of the web pages. For this reason, to increase the speed of the download processing, it is possible to provide a plurality of agents in the content searching section 114, and to have these perform parallel processing.

When following links, it is possible to give priority in crawling to links operated by web sites having a large number of content files. This is done because a web site having a large number of image or music content files often has links to web sites in the same business which also have many such content files.

For example, when first crawling web sites on the Internet, by counting the number content files contained at each web site by observing the file name extensions, it is possible to gain a grasp of which web sites have a large number of content files. Then, on the second and subsequent crawls, links can be followed, giving priority to web sites having a large number of content files. If this is done, it is possible to efficiently search a large number of web sites on the Internet.

The digital watermark decoder 115 extracts from a content file downloaded by the content searching section 114 a content ID embedded therein as a digital watermark. In the case in which processing speed of the digital watermark decoder 115 is not sufficiently high with respect to the speed of downloading of content files by the content searching section 114, leading to the possibility of processing congestion, it is possible to provide a plurality of digital watermark decoders 115 and to perform parallel processing of digital watermark decoding.

The improper usage detection section 116 accesses a content ID, which is embedded in content as a digital watermark and extracted from the content by the digital watermark decoder 115, and a content ID stored in the approved use database 112, and determines whether or not the downloaded content is approved for placement on a web page. At this point, in the case in which the content ID extracted from the content does not exist in the approved usage database 112, detection is made of the condition in which the content is being used improperly.

If the above occurs, when detecting the improper usage of the content in the improper usage detection section 116, if the content ID stored in the approved usage database 112 by the content creator, it is possible to detect that content for which placement on a web page is not approved has minimally been placed on a web page improperly by a user. By doing this, it is possible to discover such improper usage as a sales on a web page of image or music content provided to a user.

Additionally, if URL information stored in the used URL database 112 from the used URL storage section 111 is used, it is possible by inquiring of the approved usage database 112 with regard to the content ID extracted from the downloaded content and the URL of the location from which the download was made, to detect the case in which, although placement onto the web page was allowed, there was improper placement of the content onto a web page at an unapproved URL. By doing this, it is possible to discover improper usage such as the case in which content provided to a given user has been distributed to a third party without permission, and in which the third party is selling the content on a web page.

In the case in which the improper disclosure of the content is detected by the improper usage detection section 116, the improper usage notification section 117 makes a notification to that effect to the copyright holder, such as the creator of the content. This notification can be made, for example, by e-mail. It is also possible to store the results of the investigation by the improper usage detection section 116 as file in HTML (hypertext markup language) format, and to publicly disclose the stored file on a web site of the improper usage monitoring center 104. By doing this, it is possible for a copyright holder wishing to make a verification of the investigation results to use a local web browser to view the improper usage status of the content easily at any time.

When publicly disclosing the investigation results on a web site, it is also possible to make note in the HTML file of the URL at which improper usage was detected. By doing this, a person verifying the results of the investigation can use a local browser to easily access the web site at which the content file being investigate resides, thereby enabling easy verification of the content resident thereon.

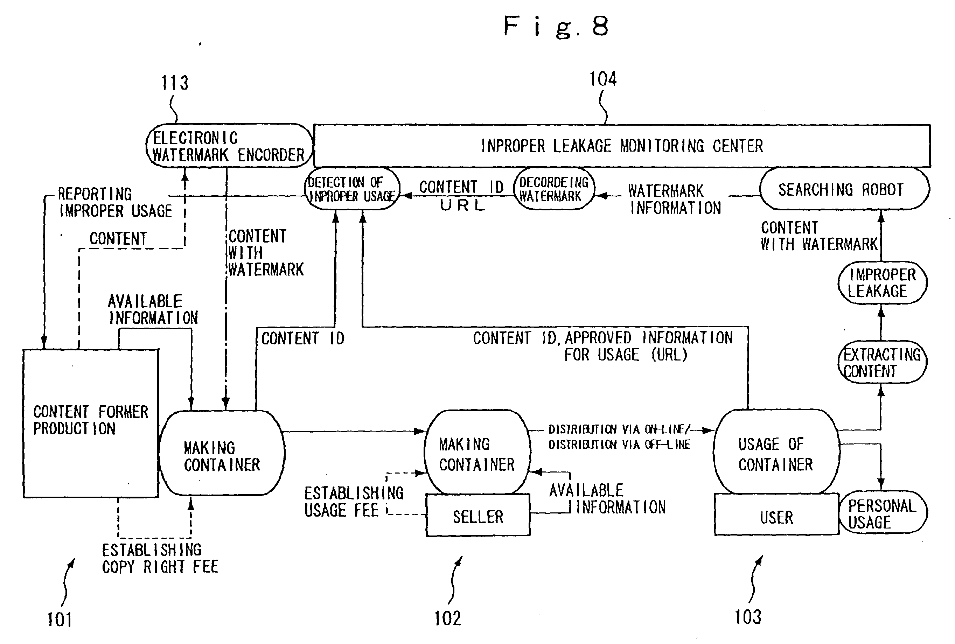

Fig. 8 is a drawing illustrating a series of operations performed in a content distribution system configured as shown in Fig. 7. In Fig. 8, first a copyright holder such as a content creator or the like produces content at a content creator terminal 101, and gives the produced content to the improper disclosure monitoring center 104. The improper disclosure monitoring center 104 uses the digital watermark encoder 113 to embed a content ID as a digital watermark into the content thus received, and returns same to the content creator terminal 101.

The creator establishes the range of approved usage and copyright fee for the content, and sets the approved usage information. When this is done, in accordance with the container encoder 107 within the content creator terminal 1091, an ID of the content which is approved for placement on a web page by the approved usage information is notified to the improper usage monitoring center 104 and stored into the approved usage database 112. Additionally, the creator uses the container encoder 107 to form the content into which a digital watermark has been embedded and the approved usage information into a container. The container produced in this manner is then given to a sales location.

The sales location sets the sales price (usage fee) by adding its own sales fee, and uses the container encoder 109 to add this to the approved usage information in the container file. The secondary container is thus placed on the web site as a file on the sales location web site, for example, As described above, it is alternately possible for the creator himself to sell a container.

The user obtains a container by downloading it from the web site of the sales location or via a CD-ROM. The approved usage information within the thus obtained container is accessed so as to determine the usable applications and usage price, and a desired application is selected. When this is done, in the case in which selection is made of placement of the content on a web page, notification is made to the improper usage monitoring center 104 of the particular web page URL and the ID of the content, these being stored into the approved usage database 112.

The user pays the usage fee for the selected application to either the sales location or the creator. This can be done on-line by electronic money or off-line. Only when the usage fee is paid does it become possible to use the container (for example, a code key is provided in the case of encrypted content), and the user uses the container decoder 110 which has thus become usable to convert the content within the container to a usable form.

In this embodiment, there are two usage patterns, one of usage whereby it is only possible to perform playback, and another whereby it is possible to place content on a web page. In the case of playback use, the container decoder 110 displays the content file expanded in memory in the case of a still picture or moving image, and outputs the content from a speaker in the case of music. However, the content is not written into an external memory device as a file having a generally used graphics or music format. Thus, the user is not left with the content after use.

In the case of extraction use, the container decoder 110 converts the content file expanded in memory to a general format data file and outputs same to outside the container decoder 110, whereupon it is written into an external memory device. By doing this, if the user selects use of content in the form of placement on a web page, it is possible to extract the content from the container and place it onto the web page.

At the improper usage monitoring center 104, the content searching section 114 (a searching robot comprising an agent) is used to sequentially search and download content located on web pages on the Internet. When this is done, if there is content on a web page that has been improperly disclosed, that content is also downloaded.

Additionally, at the improper usage monitoring center 104, the digital watermark decoder 115 is used to extract the digital watermark from the downloaded content, and detect the characteristic ID of the content. At the improper usage detection section 116, by referencing the detected content ID and URL from which the content was downloaded, and the content ID and URL from the approved usage database 112, detection is performed of improper content usage.

That is, in the case in which a content ID is detected that is not stored in the approved usage database 112 and in the case in which the user has paid the proper fee but the content ID has been detected at the URL of a web page other than the web page onto which the content was placed, the content has been improperly placed on the web page. In these cases, therefore, using the improper use notification section 117, notification is made to the creator of the URL of the web page onto which the improper placement of the content has been discovered and the content. It is also possible to issue a warning to the operator of the web page.

As described above, in this embodiment of the present invention, a search is made of web sites on the Internet and content files are sequentially downloaded from files thereon, detection being done of whether the content ID embedded therein as a digital watermark is stored as being approved for use. By doing this, it is possible to discover improper use of content that is not approved for placement on a web page, and to discover improper use of content by placement on web pages that are not approved to receive the content.

In this embodiment, although the example described is one in which a digital watermark is embedded at a improper usage monitoring center 104 before forming a container from the content file, it is sufficient to embed the digital watermark some time before the user ultimately places the content on a web page, and the timing and location of the embedding is not restricted by the foregoing described embodiment. For example, it is possible to embed the digital watermark at the time the user extracts the content from the obtained container at the user terminal 103.

In this embodiment, although information with regard to usage approval for placing the content on a web page is stored into the approved usage database 112 of the improper usage monitoring center 104 from both the content creator terminal 101. and the user terminal 103, it is alternately possible for storage to be done from either one of these two terminals. Although information with regard to usage approval is stored it is also possible to store information with regard to denial of usage permission.

For example, although the premise in this embodiment is that content created by the creator is sold to a third party, it can be envisioned that usage is denied to anyone other than the creator. In this case, the ID of the content is stored as information with regard to usage denial for the content, and a check is made as to whether the content ID extracted from downloaded content corresponds to this stored ID, so as to detect improper usage. In this case, it is not necessary to have the content price information or the application information.

In this embodiment, although the example described is one in which the content is stored in one file along with the approved usage information, it is not absolutely necessary that a container be formed. For example, it is possible perform distribution of the content and distribution of the approved usage information separately.

A second embodiment of a content distribution system according to this example is described below, this being the case in which the present invention is applied to a superdistribution system. Fig. 9 is a block diagram showing the overall configuration of the content distribution system according to the second embodiment. In Fig. 9, elements corresponding to elements in the block diagram of Fig. 7 are assigned the same reference numerals.

As shown in Fig. 9, a content distribution system according to the second embodiment is configured so that a content creator terminal 101, a sales location terminal 102, a user terminal 103, a license issuing center 121, and a billing center 122 can perform exchange of the various types of information described below, via the Internet or an information transfer medium such as a CD-ROM. Although for the purpose of the drawing only one each of the content creator terminal 101, sales location terminal 102, and user terminal 103 are shown, it will be understood that these can be a plurality of terminals.

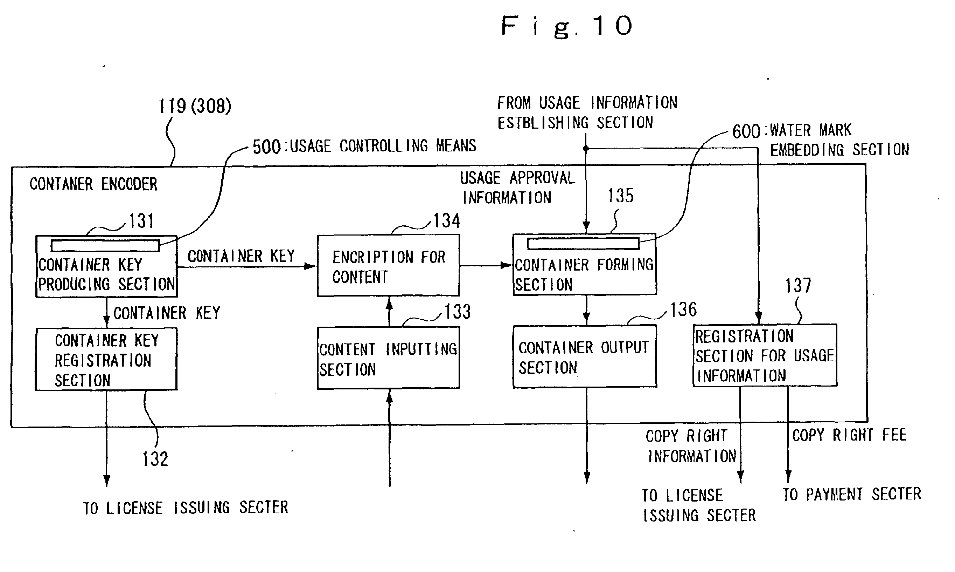

The content creator terminal 101 in this embodiment has a usage information setting section 106 and a container encoder 119. The container encoder 119 performs processing to place content created by the content creator and approved usage information required for use of the content into a single file. Fig. 10 is a drawing showing an example of the configuration of the container encoder 119.

In Fig. 10, the reference numeral 131 denotes a container key generator, which generates a container key that is a code key necessary for encrypting the content file. This container key is characteristic to each individual content, and is the decoding key used to decrypt encrypted content within the container in the container decoder 120 within the user terminal 103 (the configuration of which is described later).

In Fig. 10, the reference numeral 132 denotes a container key storage section, which stores a container key generated by the above-noted container key generator 131 in a license issuing center 121. By purchasing a container key from the license issuing center 121, the user is able to decrypt and use the encrypted content. The reference numeral 133 denotes a content input section, which inputs a content file generated by the content creator, and 134 is a content encrypting section, which uses the container key generated by the container key generator 131 to encrypt the content file input by from the content input section 133.

The reference numeral 135 is a container forming section, which adds approved usage information set by the usage information setting section 106 shown in Fig. 9 to the content file encrypted by the content encrypting section 134, so as to form a container for the purpose of forming a single file that incorporates the encrypted content and the approved usage information required for use of the content. The reference numeral 136 denotes a container output section, which outputs the container generated by the container forming section 135 to the outside. A container generated in this manner is, for example, downloaded without charge from a web site using a user terminal 103, or distributed via a CD-ROM.

The sales location terminal 102 has a approved usage information setting section 108 and a content encoder 109. Because these functions are described with regard to the first embodiment, they will not be explicitly described again herein.

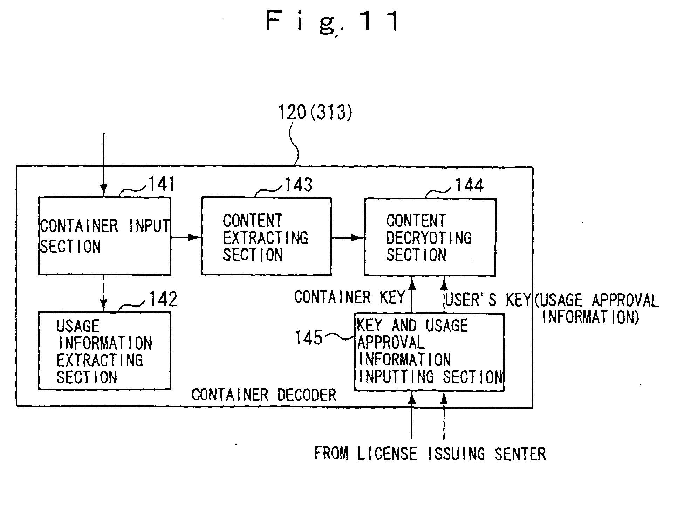

The creator terminal 103 has a container decoder 120. The container decoder 120 performs prescribed processing with respect to a container received from a content creator or from a sales location, so as to convert the content within the container to a form that can be used, and has a configuration such as shown in Fig. 11, for example.

In Fig. 11, the reference numeral 141 denotes a container input section, which inputs a container received as distributed from the content creator or sales location, and 142 is an approved usage information extraction section, which extracts approved usage information embedded as added information within the container. The user accesses this approved usage information extracted from within the container and determines what application is to be used in using the content. When this is done, the user purchases from the license issuing center 121 not only a container key required for decrypting the encrypted content, but also a license permitting use of the application of the content. The user can then use the content under the limitations imposed by the purchased approved usage information.

The reference numeral 143 denotes a content extraction section, which extracts encrypted content included within the container, and 144 is a content decrypting section, which decrypts the encrypted content extracted from the container, using the container key and the user key, which is described below, so as to convert the content to a form that can be used. The reference numeral 145 denotes a key acquisition section, which, in response to a request from a user to use content, acquires the container key and the user key from the license issuing center 121.

When the above is done, it is necessary for the user to pay a usage fee to the billing center 122 and, for example, the container key is obtained from the license issuing center 121, under the condition that there is notification from the billing center 122 to the license issuing center 121 with regard to payment. When the user obtains the container decoder 120, the user key issued by the license issuing center 121, under the condition that the user has been registered with the license issuing center 121. Billing for the user key can also be used as a condition for issuing of the user key.

The license issuing center 121, as shown in Fig. 9, has a key management section 123, which is configured, for example, as shown in Fig. 11.

In Fig. 11, the reference numeral 151 denotes a user key generator, which, in order to permit only a user that has paid a fee to use the content, generates a user key required in the container decoder 120 within the user terminal 103 to convert the content file within the container to a form that can be used. This user key is a key characteristic to each individual user, and cannot be transferred to a third party.

For example, when a container key is downloaded by a user to a user terminal 103 from the license issuing center 121, in the license issuing center 121 by performing prescribed processing of the container key using the user key, it not possible for to decrypt the encrypted content unless there is the user key. The processing to prohibit use of content unless there is also the user key in addition to the container key will be referred to herein as " locking with the user key." Encryption processing is one example of locking,

The reference numeral 152 denotes a user key management section, which performs user registration in response to a request from a user, and which manages a user key generated for each user by the user key generator 151, and 153 is a container key collection section, which collects container keys generated for each content in the container encoder 119 within the content creator terminal. The reference numeral 154 denotes a container management section, which manages container keys collected by the container key collection section 153.

The reference numeral 155 is a key issuing section, which receives from the billing center 122 a notification to the effect that a user has paid a fee in accordance with a usage application selected by the user, and issues a container key to the user, and also issues approved usage information that limits the use of the application to the selected application. At this point, by locking the container key using the above-described user key, it is possible to convert the container key to a container key that can only be used by that user. The key issuing section 155 issues a user key in response to a user registration from the user.

The above-noted billing center 122 has a billing section 124 and a fee distribution section 125, such as shown in Fig. 9. The billing section 124 receives a fee in accordance with a method of use selected from by the user from the approved usage information. After billing processing is completed, a notification is made to the license issuing center 121 that payment has been made. The fee distribution section 125 performs processing to distribute the received fee to the content rights holder and the sales location as a copyright fee and a sales fee.

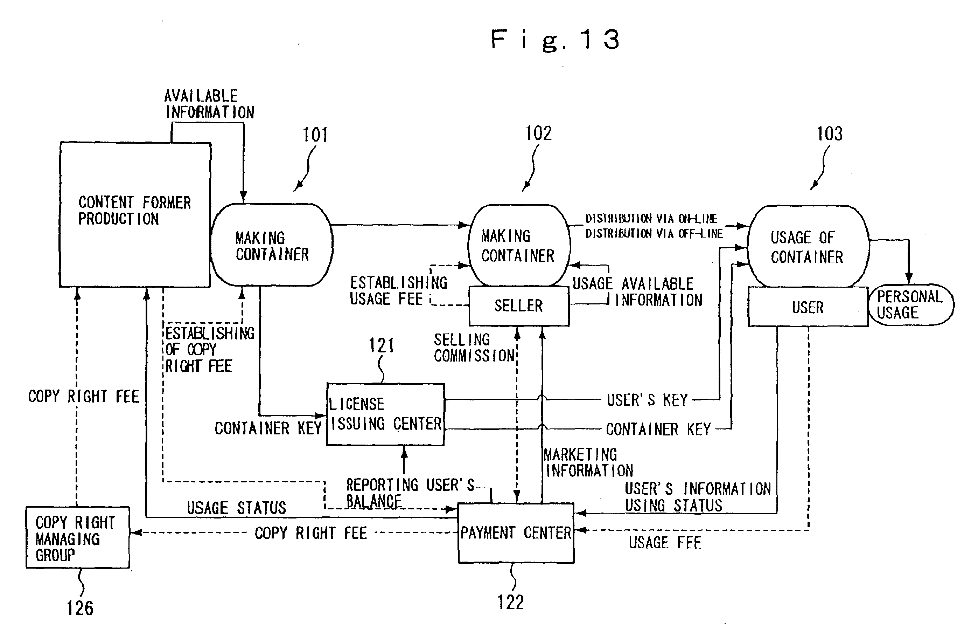

Fig. 13 is a drawing illustrating a series of operations performed by a content distribution system configured as shown in Fig. 9 to Fig. 12. In Fig. 13, first the creator, such as the content creator creates content on the content creator terminal. The creator sets approved usage information that establishes the permitted range of use and copyright fee for the content. Additionally, the creator uses the container encoder 119 to form a container from the content and the approved usage information, so as to generate a container file.

When generating a container, the container encoder 119 generates a container key that serves as a code key, this container key being encrypted and incorporated into the content file. Additionally, the container encoder 119 stores the generated container key into the license issuing center 121, and stores the copyright fee set by the creator into the billing center 122. The creator then gives a container file generated in this manner to a sales location.

The sales location sets the sales price of the container by adding its own sales fee, and uses the container encoder 119 to add this to the approved usage information. At this point, the fee that the user paid is the fee according to the sales fee of the sales location stored in the billing center 122 and the copyright fee stored in the billing center 122 by the container encoder 119 of the content creator terminal 101.

The sales location sells the container by placing the secondary container file created by the container encoder 109 onto a web site, or by writing it onto a CD-ROM. The user can obtain the container by downloading the container from the sales location web site, or via the CD-ROM. The approved usage information within the obtained container is referenced so as to determine what applications can be used and what the usage fee is, and a desired application is selected.

The user pays a usage fee in accordance with the selected application to the billing center 122. In response to this, the billing center 122 makes notification to the license issuing center 121 that billing processing has been completed. Upon receiving this notification, the license issuing center 121 issues to the user usable information in accordance with the paid fee and a container key (locked by the user key). Separate from this operation, the license issuing center 121, in response to a request from the user, issues a user key.

Therefore, the container decoder 120 can only be used by obtaining the usable information and the user key. The user uses the container decoder 120, which can now be used, to convert the content within the container to a usable form. When this is done, the container decoder 120 only permits the user only the method of usage specified in the approved usage information. Thus, the user can use the content by the method of usage that he or she selected.

Additionally, at the billing center 122 a content usage fee is charged to the user. The container usage fee paid by the user is distributed to the content rights holder and the sales location, in accordance with distribution information formed by the sales fee stored in the sales location terminal and the sales fee. When this is done, the copyright fee for the content copyright holder is paid via a copyright management group 126, as shown in Fig. 13.

As shown in Fig. 13, based on application information and the like selected by the user from usable information, it is possible to have user information and usage status collected at the billing center 122, notification thereof being made to the content creator or the like, and this being provided to a sales location as marketing information.

As described above, in the second embodiment, in addition to a characteristics container key for each individual container, a characteristic user key for each individual user is also used to limit use of the content. By doing this, it is possible, in contrast to superdistribution systems which do not have a code key corresponding to the container key, to make it impossible for a third party that does not have a user key to unlock the container key, thereby enabling limiting of the use of the content to only users which have properly obtained the container key. Thus, it is possible to more effectively prevent improper use of the content.

Furthermore, although in the above-described embodiment the description is that of the case in which, when the user downloads a container key from the license issuing center 121, the container key is locked by the user key in the license issuing center 121, the present invention is not limited in this manner by this embodiment. For example, it is alternately possible when a user downloads a container file to lock the container file with the user key at the content producer terminal 101 or the sales location terminal 102.

It is also possible when the user downloads a content file to lock the container file with the user key in the container decoder 120. Additionally, it is possible to lock the container key with the user key when the user downloads the container key in the container decoder 120 within the user terminal 103.

Further, although, the above-mentioned embodiment discloses an example in that an user extracts an usable information from the obtained container and selects usable application with reference to the usable information, the present invention does not restricted to this embodiment.

For example, the licensing center 21 may collect such usable information from a content owner or selling shop and thereafter may provide such usable information to the user in response to a request of the user.

### Third Embodiment

Next, a third embodiment of the content distributing system of the present invention will be explained hereunder.

The following third embodiment relates to a system in which the electronic water mark as shown in the first embodiment is associated with the super distributing system as shown in the second embodiment.

According to the above-mentioned second embodiment, this embodiment can provide a system in which only an user who correctly purchases a container key can use the content, however, it does not especially consider about improper usage of the content after the content had once been formally extracted from a container.

However, the third embodiment can enable to expose or trace such improper usage of the content after a certain content which had been extracted from a container and once used.

Fig. 8 shows a block diagram in which a overall construction of a content distributing system as shown by the third embodiment.

Note, that in Fig. 8, since the portions each having a numerical symbol which is identical to that used for corresponding the respective portions as shown in Figs. 1 and 3, has a function which comply with that of the corresponding portion, precise explanation therefor will be omitted.

As shown in Fig. 8, the content distributing system of the third embodiment is configured so that many different kinds of information as mentioned hereunder can be transferred and imported through such content former terminal 1, selling shop terminal 2, user's terminal 3, improper distribution monitoring center 4, license issuing center 21 and payment center 22.

Although for the purpose of the drawing only one each of the content creator terminal 101, sales terminal 102, and user terminal 103 are shown, it will be understood that these can each be a plurality of terminals. The configuration of the improper usage monitoring center 103, the license issuing center 121, and the billing center 122 are the same as shown in Fig. 7 and Fig. 9.

The content creator terminal 101 in this embodiment has a usage information setting section 118 and a container encoder 119. The usage information setting section 118, similar to the usage information setting section 106 shown in Fig. 7 and Fig. 9, has a function of setting approved usage information comprising limiting information, price information, and application information and the like, but differs in that the range of settable applications is broader than in the foregoing embodiment. That is, whereas in the first and second embodiments the application of the content was either playback use or use by placement of the content onto a web page, in this embodiment it is possible to set the many types of applications described below.

Specifically, in the case in which the content is a still picture or moving image, the application information includes displaying, copying, editing, printing, and placement onto a web page of content, and distribution of copied content. In the case in which the content is music, the application information includes playback, copying, editing, digital recording, and placement onto a web page of content, and distribution of copied content.

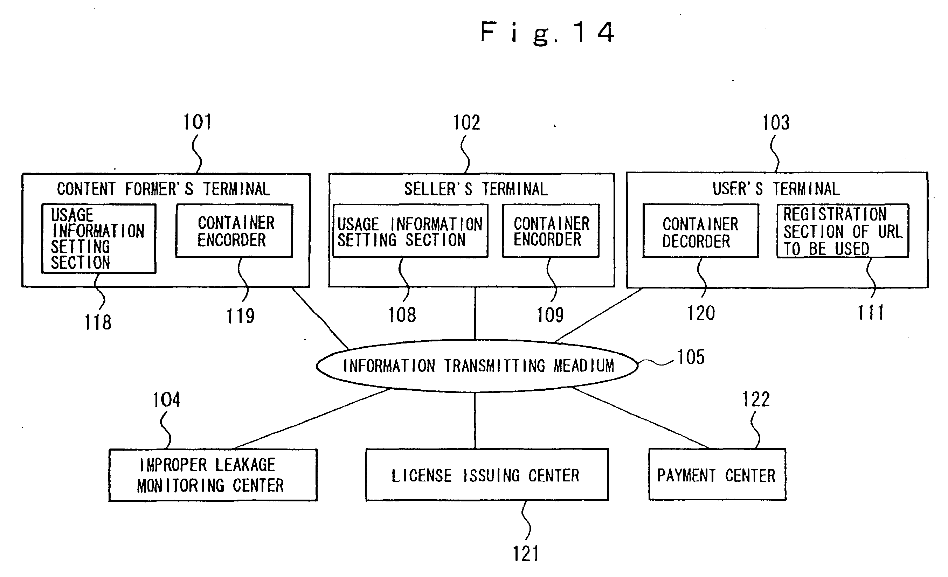

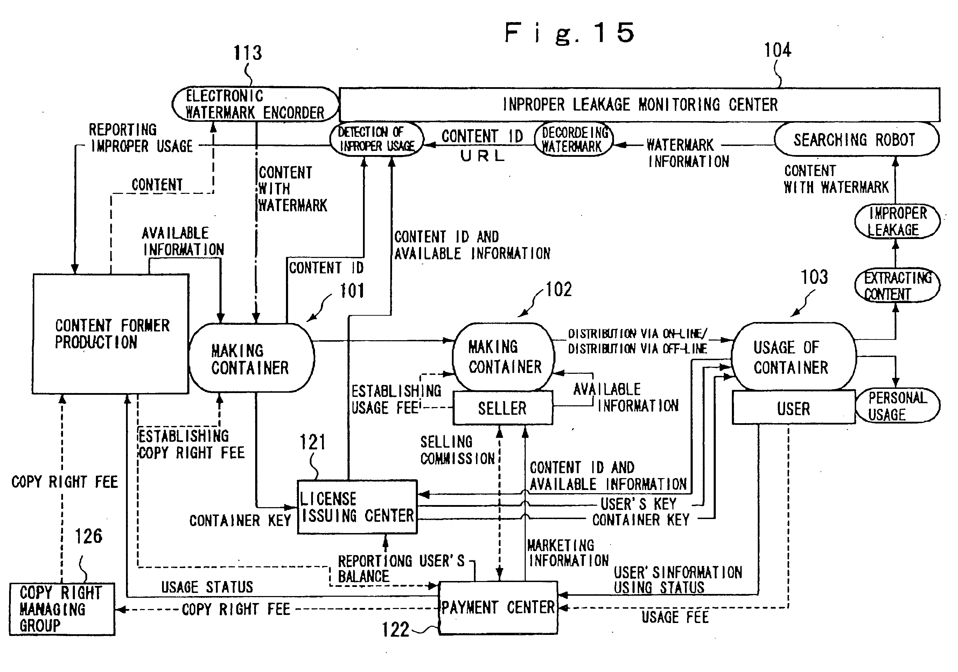

Fig. 15 is a drawing illustrating a series of operations performed in a content distribution system configuration as shown in Fig. 14. In Fig. 15, first a copyright holder such as a content creator or the like produces content at a content creator terminal 101, and gives the produced content to the improper disclosure monitoring center 104. The improper disclosure monitoring center 104 uses the digital watermark encoder 113 to embed a content ID as a digital watermark into the content thus received, and returns same to the content creator terminal 101.

The creator establishes the range of approved usage and copyright fee for the content, and sets the approved usage information. When this is done, in accordance with the container encoder 119 within the content creator terminal 101, an ID of the content which is approved for placement on a web page by the approved usage information is notified to the improper usage monitoring center 104 and stored into the approved usage database 112. Additionally, the creator uses the container encoder 119 to form the content into which a digital watermark has been embedded and the approved usage information into a container, and a container file is generated which comprises a container incorporating the content into which is embedded the digital watermark and the approved usage information.

When forming the container, the container encoder 119 generates a container key which serves as a code key, and encrypts the content file with the container key end embeds it within the container. Additionally, the container encoder 119 stores the generated container key in the license issuing center 121, and also stores the copyright fee set by the creator into the billing center 122. The creator then gives the container file created in this manner to the sales location.

The sales location establishes the sales price of the container by adding its own sales fee, and uses the container encoder 119 to add this to the approved usage information within the container file. When this is done, the container encoder 109 stores the set sales fee into the billing center 122. At this point the distribution information for the fee paid by the user is formed in accordance with the sales fee of the sales location stored in the billing center 122 an the copyright fee stored in the billing center 122 by the container encoder 119 of the content creator terminal 101.

The sales location sells the container by placing a file created as a secondary container by the container encoder 109 onto the web site of the sales location or via by placing the file onto a CD-ROM. It is also possible for the creator himself to sell the container by acting as the sales location.

The user obtains the container by downloading the container from the web site of the sales location or via a CD-ROM. The approved usage information within the thus obtained container is accessed so as to determine the usable applications and usage fees, and a desired application is selected. When this is done, if the use by downloading the content from a web site is selected, the URL of the web page and the content ID are notified to the license issuing center 121 by the used URL storage section 111.

The license issuing center 121 makes further notification of the received URL and content ID to the improper usage monitoring center 104, at which these are stored into an approved usage database 112. In this case, although the storage of the URL and the content ID into the approved usage database 112 is made via the license issuing center 104, it is possible as in the case of the first embodiment to do this directly from the user terminal 103 to the improper usage monitoring center 104.

Having selected a content application, the user pays a usage fee responsive to the selected application, via the billing center 122. In response, the billing center 122 notifies the license issuing center 121 that the billing processing has been completed. Upon receiving this notification, the license issuing center 121 issues usage approved information and a container key (for example, one that is locked by a user key) to the user in accordance with the paid amount. Separate from this, the license issuing center 121 uses a user key in response to a request from the user.

Only upon obtaining the container key, the user key, and the usage approved information in this manner is it possible to use the container decoder 120. The user uses the container decoder 120 that has become usable to convert the content within the container to a usable form. The container decoder 120 can only be used by a method that is specified by the usage approved information. By doing this, it is possible for the user to use the content by the method of usage that the user has selected himself.

At this point, in the case in which the user selects use by playback, the container decoder 120 uses the container key to decrypt the encrypted content within the container, this being done within a memory, so as to make display or printout of the content in the case of a still picture or moving image. If the content is music, output is made to a speaker. However, output is not made to an external memory device as a file having a generally used graphics or music format. Thus, the user is not left with the content after use, and it is not possible for the user to copy or edit decoded data, or to place the data on a web page, in addition to making it impossible for the user to disclose copied content to a third party without permission. Thus, the user is only permitted to use the content for personal applications.

However, in the case in which the user has selected extraction use such as copying, editing, or placement of content onto a web page, the container decoder 120 converts the decoded content file in memory to a generally used format and outputs it to outside the container decoder 120 so that it is written into an external memory device. By doing this, it is possible for the user to place a content file in a generally used format onto the web page of the user.

At the improper usage monitoring center 104, the content searching section 114 (a searching robot comprising an agent) is used to sequentially search and download content located on web pages on the Internet. When this is done, if there is content on a web page that has been improperly disclosed, that content is also downloaded.

Additionally, at the improper usage monitoring center 104, the digital watermark decoder 115 is used to extract the digital watermark from the downloaded content, and detect the characteristic ID of the content. At the improper usage detection section 116, by referencing the detected content ID and URL from which the content was downloaded, and the content ID and URL from the approved usage database 112, detection is performed of improper content usage.

That is, in the case in which a content ID is detected that is not stored in the approved usage database 112 and in the case in which the user has paid the proper fee but the content ID has been detected at the URL of a web page other than the web page onto which the content was placed, the content has been improperly placed on the web page. In these cases, therefore, using the improper use notification section 117, notification is made to the creator of the URL of the web page onto which the improper placement of the content has been discovered and the content. It is also possible to issue a warning to the operator of the web page.

Additionally, at the billing center 122, a usage fee is charged to the user for the usage of the content. Then, based on distribution information comprising a copyright fee stored by the content creator terminal 101 and a sales fee stored by the sales location terminal 102, the usage fee paid by the user is distributed to the content copyright holder and the sales location. When this is done, the copyright fee for the content copyright holder can be paid via a copyright management group 126 as shown in Fig. 15.

As described above, in the third embodiment, by using a container key and a user key as keys for rendering content usable by a user, it is possible to limit use of the content to only a user who has properly purchased the container key. Furthermore, in this embodiment, because the digital watermark embedded into the content is used to monitor improper usage on a web page, it is possible to discover improper usage, such as distribution to a third party by a user who purchases a container key properly and converts the content to a generally used format, and sales of the content on a web page.

Because improper use such as copying of obtained content and editing and sales of content are often performed on a web page, it is possible to provide a significant improvement in the protection of the copyright of the content by discovering improper usage of the content on web pages. By doing this, in contrast to superdistribution systems of the past, to free the distribution system from the task of limiting usage in view of improper usage, thereby enabling use of the content with a variety of applications.

In the third embodiment, although the example described is one in which a digital watermark is embedded at a improper usage monitoring center 104 before forming a container from the content file, it is sufficient to embed the digital watermark some time before the user ultimately places the content on a web page, and the timing and location of the embedding is not restricted by the foregoing described embodiment. For example, it is possible to embed the digital watermark at the time the user extracts the content from the obtained container at the user terminal 103.

In the third embodiment, although information with regard to usage approval for placing the content on a web page is stored into the approved usage database 112 of the improper usage monitoring center 104 from both the content creator terminal 101 and the user terminal 103, it is alternately possible for storage to be done from either one of these two terminals. Although information with regard to usage approval is stored it is also possible to store information with regard to denial of usage permission.

In third embodiment, although the example described is one in which the content is stored in one file along with the approved usage information, it is not absolutely necessary that a container be formed. For example, it is possible perform distribution of the content and distribution of the approved usage information separately.

Furthermore, although in third embodiment the description is that of the case in which, when the user downloads a container key from the license issuing center 121, the container key is locked by the user key in the license issuing center 121, the present invention is not limited in this manner by this embodiment. For example, it is alternately possible when a user downloads a container file to lock the container file with the user key at the content producer terminal 101 or the sales location terminal 102.

It is also possible when the user downloads a content file to lock the container file with the user key in the container decoder 120. Additionally, it is possible to lock the container key with the user key when the user downloads the container key in the container decoder 120 within the user terminal 103.

Although the third embodiment is described for the example in which the user extracts from the obtained container usable information and refers to this to select a usable application, the present invention is not restricted in this manner by this embodiment. It is possible, for example, for the license issuing center 121 to collect usable information from the content copyright holder or sales location and to provide usable information in response to a request from a user.

In the above-described third embodiment, the content distribution system the terminals and centers comprise a computer CPU or MPU, a RAM, and a ROM or the like, and can be implemented by a program stored in RAM or ROM.

Therefore, it is possible to store into a storage medium such as a CD-ROM a program which causes a computer to achieve the above-noted functions, this program being read into the computer. In addition to a CD-ROM, it is possible to use a floppy disk, a hard disk, an optical disk, a magneto-optical disk, a DVD, a magnetic tape, or a non-volatile memory card or the like as the storage medium for storing the above-noted program.

By the computer executing the supplied program, not only is the above-noted embodiment implemented, but also in the case in which this program acts in concert with an operating system or other application running on the computer to implement the functions of the above-noted embodiment, or in a case in which all or part of the processing of the supplied program is performed by a functional expansion board or function expansion unit of the computer so as to achieve the functions of the above-noted embodiment, this program is encompassed in the embodiment of the present invention.

Furthermore, each of the foregoing embodiments is merely exemplary of the present invention, and will not be understood as limiting the technical scope of the present invention. That is, the present invention can take on a variety of other forms without extending beyond the spirit and the essential features of the present invention as described herein.

According to this embodiment, by searching web page on a network and sequentially capturing content from the web pages, and referencing content identification information embedded into the content as a digital watermark and management information with regard to the approval or denial of placement of the content onto a web page, so as to detect improper use of the digital content, the digital watermark is used to constantly monitor for improper use of content not approved for placement on a web page, enabling a system whereby protection is made of the copyright of digital content distributed on the network.

According to another feature of this example of the present invention, by managing resource information representing a web onto which placement of the digital content is permitted in relation to the content identification information, so as to detect improper usage of the digital content, it is possible to discover the case in which although placement of the content onto a web page is permitted, placement onto another web page constitutes improper use, thereby providing reliable protection for the copyright of digital content distributed on the network.

According to yet another feature of this example of the present invention, by using not only a characteristic code key for each content used to encrypt the digital content but also a characteristic user key for each user using the digital content, so a to limit usage of the digital content, even in the case in which the digital content and the code key thereof are improperly disclosed to a third party who has not purchased the digital content properly, it is possible to render the digital content unusable to this third party, who does not have a user key, thereby enabling limitation of use of the digital content to a user who has made the purchase properly. Therefore, it is possible to further reliably protect the copyright of digital content distributed on the network.

According to yet another feature of this example of the present invention, by combining the above-described invention with regard to a digital watermark with an invention with regard to a user key, it is possible not only to limit usage of digital content to only a user who has made a proper purchase thereof, but also to reliably discover cases in which, after a user having made a proper purchase of digital content, the user without permission places the content onto a web page or places the content onto a web page for which permission for such placement has not been given. Thus, with the present invention, by taking care with regard to improper use after proper purchase of digital content, it is possible to relax limitations on the usage of digital content, thereby enabling provision of a variety of digital content in response to user requests.

Next, as another aspect of the present invention, a system which executes collection and distribution of a usage fee and a copyright fee used in a content distribution system of the present invention is described below.

This type of system in the past which sells digital content on-line had a content file transmission module and a billing module, both of which were operated by the sales location. That is, a copyright holder who creates content ships the content file to the sales location. The sales location stored the received copyright fee into the content file transmission module. The content file stored in the copyright fee transmission module is placed on a web page of the sales location for the purpose of distribution.

A user accesses the web page of the sales location and selects a desired content file, and further accesses the billing module of the sales location so as to pay a fee for the selected content file. When the billing processing is completed, the billing module permits the content file transmission module to transmit. Upon receiving the permission to transmit, the content file transmission module downloads the content file to the user. By doing this, the user can use various commercially available software to use the downloaded content file by playing it back or editing it, for example.

When the above occurs, the fee paid by the use to the billing module is collected by the sales location, which make payment of a copyright fee to the copyright holder or via a copyright management group.

In the above-described prior art, however, because the sales location performs billing processing for the digital content to be used, it is not only necessary for the sales location to establish its own sales fee, but also to establish the final sales price, taking into consideration a copyright fee or the like for the creator of the digital content. Additionally, it is necessary for the to distribute the fee collected from the user to the sales location itself and to the copyright holder or the like, this being considerably troublesome.

In particular in the case in which the content file is distributed via a chain formed by a plurality of sales locations, there is a complex relationship between the fees of each sales location and the copyright fees that are added at each step in the chain. Thus, the establishment of the final sales price and the distribution of fees becomes troublesome, this representing a large burden on the sales locations.

Additionally, in the prior art, because the distribution of a copyright fee was made by a sales location to the copyright holder or to a copyright management group, there were improper practices such as payment of a fixed copyright fee even if there was not actual sale, or payment of only a small copyright fee that is lower than the amount actually to be paid. In a system of the past, however, the copyright holder or the copyright management group had no way of determining whether or not the copyright fee paid by a sales location was proper, and could not prevent such improper practices by sales locations.

Additionally, in the prior art, in using digital content the only condition applied was that of paying a billed fee, so that one the established fee is paid, it was possible to use the digital content in any manner. For this reason, a user needed only to pay a given fee to purchase the content file, after which he or she could copy or edit it with complete freedom, making it impossible to set the copyright fee in accordance with the manner in which the user is using the content.

This example of the present invention was devised with the above-noted drawbacks of the present invention in mind, and is directed at reducing the burden on the sales location in performing billing of a fee for the use of digital content.

This example of the present invention is also directed at effectively preventing improper actions of a sales location in a system for billing for use of digital content.

Additionally, this example of the present invention is directed at enabling the effective setting of copyright fee commensurate with the application used to use the digital content in a system for billing a fee for use of digital content.

A content distribution system [W1]according to this example is a content distribution system having, on a network 306, a distribution terminal 700 distributing digital content and a user terminal 703 that receives and uses distributed digital content, wherein billing is performed for use of the digital content, this content distribution system having:
a billing management means 318, which receives, via the network, from the terminals price information of each, and
a calculation means 319 for calculating, based on each price information managed by the fee management means 318, a usage fee for the digital content.

This system further has a distribution means 323 whereby, based on each price information managed by the fee management means 318, a usage fee with respect to use of the digital content is distributed.

Another aspect of this example [W2]of the present invention is a content distribution system having, on a network, a distribution terminal 700 distributing digital content and a user terminal 303 that receives and uses distributed digital content, wherein billing is performed for use of the digital content, this content distribution system having:
a history management means 322 for managing usage history which, based on billing information with respect to use of the digital content, manages usage status of the digital content; and
a notification means 320 for notification, which makes notification to a provider of the digital content of a distribution fee responsive to a usage status obtained from the usage history management means 322 or to a distribution fee responsive thereto,
wherein the usage history management means 322 and the notification means 320 are provided at a third party terminal separate from the distribution terminal 700 on the network.

Yet another aspect of this example of the present invention is a content distribution system [W3]haing, having, on a network 306, a distribution terminal 700 distributing digital content and a user terminal 303 that receives and uses distributed digital content, wherein billing is performed for use of the digital content, this content distribution system having:
a setting means 307 for setting usage information, which sets as usage information an application that is either approved or denied for use among various applications of the digital content at the distribution terminal 700;
a selection means 710 for selecting a desired application from applications approved for use by the usage information setting means 309, 310; and
usage limiting means 710 for limiting usage such that the usage of the digital content is limited to just an application selected by the selection means 710.

The above-noted usage limiting means 316 [W4]has, for example:
an encoding means 308, 311 for encoding, which places usage information set by the usage information setting means 309, 310 and the digital content in a container;
a decoding means 313 for decoding, which extracts the digital content from the container generated by the above-noted encoding means and renders it into a usable condition; and
a usage approval management means, which issues approved usage information for limiting the usage of the digital content to only an application selected by the selection means,
wherein when extracting the digital content from the container, the method of extracting the digital content is changed, based on the above-noted approved usage information issued from the approved usage management means 316.

Another aspect of this example of the present invention is a user terminal 303 connected to a network separately from the distribution terminal 700 distributing digital content, this user terminal 303 having:
a fee management means 318, which receives from the distribution terminal 706, via said network, price information set thereby and manages the price information;
a calculation means for calculating, based on price information managed by the fee management means 318, a usage fee for the digital content; and
a fee distribution means 323, which, based on each price information managed by the fee management means 318, distributes a usage fee charged for use of the digital content.

Another aspect of this example of the present invention is a terminal connected to the network separately from the distribution terminal distributing digital content, this terminal having:
a usage history management means for managing usage status of the digital content, based on billing information for usage of the digital content; and
a notification means for notification to the digital content provider of a distributed fee according to a usage status obtained from the usage history management means or a distributed fee responsive thereto.

Another aspect of this example of the present invention is a terminal connected to a network separately from the distribution terminal distributing digital content, this terminal having:
a selection means 710, which selects a desired application from applications for which use of the digital content has been approved, according to usage information set by the distribution terminal; and
a decoding means 313, which extracts the digital content from a container into which have been placed the digital content and the usage information, so as to change them to a usable condition,
wherein the decoding means 313, when the digital content is extracted from the container, changes a method extraction, according to usage approval information issued responsive to an application selected by the selection means 710.

A content distribution method according to this example of the present invention has:
a step of storing price information set by a distribution terminal for digital content into a third party terminal provided separately on a network and separately from said distribution terminal, via the network; and
a step of calculating a usage fee for the digital content, based on price information stored into the third party terminal.

Another aspect of this example of the present invention has:
a step of monitoring a usage status of said digital content at a third party terminal provided on a network separate from a distribution terminal distributing the digital content; and
a step of notifying a provider of the digital content of a usage status obtained by monitoring or a distribution fee responsive thereto.

Another aspect of this example of the present invention has:
a step of setting, as usage information, an application for which approval or denial of usage of the digital content has been made, from among various application of the digital content; and
a step of selecting, at a user terminal receiving and using the digital content, a desired application from applications approved for usage according to the usage information; and
a step of performing control so that usage of the digital content is limited to the selected application.

By incorporating the above-noted technical means, in this example of the present invention, using a digital content distribution terminal 303, there is no need to consider the fee set by an intermediate entity in the distribution chain when establishing a final sales price, so that it is sufficient to establish and store in the third party terminal your own fee. Additionally, there is no processing to distribute the fee paid by a user of the digital content to a content provider or to each distributor such as sales locations.

Additionally, according to another feature of this example of the present invention, the actual usage status of the digital content is monitored by a third party terminal and notification of the result of this monitoring is made to the content provider, so that by comparing the details of the notification with the actually paid copyright fee, it is possible to easily verify whether or not improper use is being done.

According to yet another feature of this example of the present invention, the usage of digital content is limited to only an application for which a payment of a fee has been made from a user of the digital content, so that unless the user pays a fee for the desired application, it possible to render the application unusable in using the digital content.

This example of the present invention is described in detail below, with references made to relevant accompanying drawings.

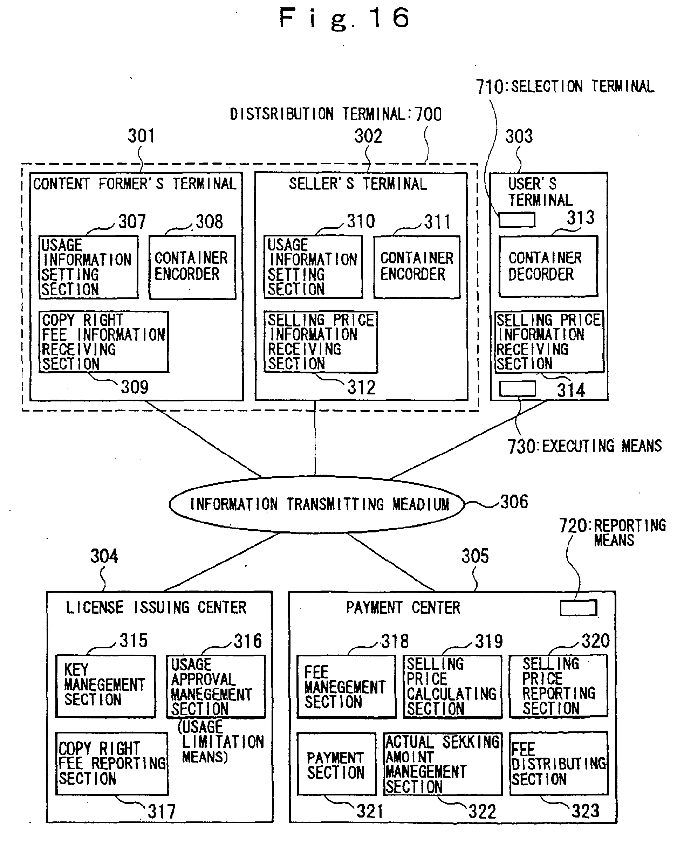

Fig. 16 is a block diagram showing a first embodiment of a content distribution system according to this example of the present invention.

In Fig. 16, the reference numeral 301 denotes a content creator terminal used by a creator or the like who creates digital content (hereinafter simply referred to as content), 302 is a sales terminal used by a sales location or the like in selling the content, 303 is a user terminal used by a user, for example, in receiving and using provided content, 304 is a license issuing center which provides the user with a license to use the content, 305 is a billing center terminal, which performs billing processing with respect to use of the content, and 306 is a network such as the Internet or an information transfer medium formed by a storage medium such as a CD-ROM or a floppy disk.

In a content distribution system according to this embodiment, the content creator terminal 301, the sales terminal 302, the user terminal 303, the license issuing center 304, and the billing center 305 are configured so as to enable exchange of a variety of information to be described below, via the Internet or an information exchange medium such as a CD-ROM. In this case, although for the purpose of the drawing only one each of the content creator terminal 301, sales terminal 302, and user terminal 303 are shown, it will be understood that these can each be a plurality of terminals. The license issuing center 304 and the billing center 305 can be one existing on the information transfer medium 306.

The above-noted content creator terminal 301 has a usage information setting section 307 and a container encoder 308. When a copyright holder such as a content creator or the like provides content, the usage information setting section 307 sets information representing the usable range for the user. The usage approved information includes, for example, limitation information such as the period during which use is possible, the number of uses, and the overall time of usage, price information such as a copyright fee, and application information, such as would limit the application using the content.

In the case in which the content is a still picture or moving image, the application information includes content display, copying, editing, and printing or the like. In the case in which the content is music, the application information includes content playback, copying, editing, and digital recording. The copyright fee for these can be set for each of these applications individually.

The container encoder 308 performs processing that incorporates the produced content and approved usage information required for use of the content into a single file, which is referred to as the container. Content on the information transfer medium 306 is not distributed as is, but in the form of a container. For details of the container decoder 308, refer to the above description with regard to Fig. 10.

The copyright fee notification receiving section 309 receives from the billing center 305 a notification of the copyright fee that should be basically taken by the copyright holder for the record of content sales, via license issuing center 304. The billing center 305, as described below, is configured so as to grasp what content has been used in what manner by what application, and manages a copyright fee that is to be paid to the copyright holder as the overall copyright fee, from the individual copyright fees set for each application using the content, and makes notification thereof to the content creator terminal 301, via the license issuing center 304.

The reference numeral 137 in Fig. 10 denotes a used information recording section, which, of the usable information set by the usage information setting section 304, stores limitation information or application information (referred to collectively as copyright information) in the license issuing center 304, and stores copyright fees for each application individually in the billing center 305.

Returning to Fig. 16, the sales location terminal 302 has a usage information setting section 310, a container encoder 311, and a sales price notification receiving section 312. The sales location receives a container generated by the content creator terminal 301 and, for example, displays the container on a web page, so as to enable downloading therefrom by a user. It is also possible to distribute the container off-line, using a storage medium such as a CD-ROM. The sales location can also advertise the container being distributed.

At the usage information setting section 310 of the sales location terminal 302, sales fees for various types of services for sales such as noted above are set. The copyright holder can also, based on application information set as an application, the use of which is approved or denied, and limitation information that limits the use of the content, set application information and limitation information (hereinafter collectively referred to as sales information) for each sales location individually.

The container encoder 311 incorporates a container generated at the content creator terminal 301 and added information such as the sales fee and sales information and the like, so as to form a single file, which is formed into a container. When forming the container, the same container key is used as is generated by the container encoder 308 within the content creator terminal 301. The container encoder 311 has the same type of configuration as the usage information setting section 137 shown in Fig. 10, and stores set sales information into the license issuing center 304 and stores a sales fee into the billing center 305.

The sales price notification receiving section 312, receives from the billing center 305 a notification of a final sales price, which is calculated taking into consideration a copyright fee and a sales fee. As described above, the billing center 305 has stored in it a copyright fee set by the copyright holder and a sales fee set by the sales location. At the sales location, a final sales price is calculated based on these fees, notification of the result of which calculation being made to the sales location terminal 302. It is also possible to incorporate this sales price of which notification is made into the container. The user terminal 303 has a container encoder 313 and a sales price notification receiving section 314. The container encoder 313 performs prescribed processing of a received container that is distributed from a content creator or a sales location, so as to convert the content in the container, to which has been added approved usage information and the like to a usable form. When this is done, the user accesses the approved usage information included within the container and determines what application to use in using the content. The sales price notification receiving section 314 receives notification of a final sales price, which is calculated by the billing center 398, taking into consideration the copyright fee, the sales fee, and the like. As described above, notification of the sales price is also made from the billing center 305 to the sales location terminal 302, and indicated to the user by the sales location, and when the user makes an actual payment of a usage fee for content to the billing center 305, for the purpose of verification, the sales price is indicated to the user from the billing center 305 as well.

The configuration of the container encoder 313 in this embodiment can be the same as that shown in Fig. 11.

In Fig. 10, the reference numeral 141 denotes a container input section, which inputs a container received as distributed from the content creator or sales location, and 142 is an approved usage information extraction section, which extracts approved usage information embedded as added information within the container. The user accesses this approved usage information extracted from within the container and determines what application is to be used in using the content.

When this is done, the user pays the billing center 305 a usage fee (sales price) in accordance with the determined application, so as to obtain from the license issuing center 304 not only a container key required for decrypting the encrypted content, but also a license permitting use of the application of the content. The user can then use the content under the limitations imposed by the purchased approved usage information.

The reference numeral 143 denotes a content extraction section, which extracts encrypted content included within the container, and 144 is a content decrypting section, which decrypts the encrypted content extracted from the container, using the container key and the user key, which is described below, so as to convert the content to a form that can be used. The reference numeral 145 denotes a key acquisition section, which, in response to a request from a user to use content, acquires the container key and the user key from the license issuing center 304. When the above is done, if there is payment notification from the billing center 305 to the license issuing center 304, the container key and the usage approved information are issued from the license issuing center 304.

The license issuing center 304 has a key management section 315, a usage approval management section 316, an a copyright fee notification section 317, as shown in Fig. 16. The key management section 315 collects container keys generated in the container encoder 308 within the content creator terminal 301 for each content and manages the collected container keys. When a notification to the effect that the user has made payment of the fee for a user-selected content is received from the billing center 305, a container key for this container is issued to the user.

The usage approval management section 316 collects copyright information (content limitation information and application information) set by the usage information setting section 301 within the content creator terminal 301 and sales information (limitation information and application information for each individual sales location set based on the copyright information) set by the usage information setting section 310 within the sales location terminal 302, and manages this information. When notification from the billing center 305 is received that payment from the user has been received, usage approved information for limiting usage of the content to the application in accordance with the fee paid is issued to the user.

The copyright fee notification section 317 receives a copyright fee that is to be received from the billing center 305 by the copyright holder in accordance with the sales record of the content, and notification of this is made to the content creator terminal 301.

The billing center 305, as shown in Fig. 1, has a fee management section 318, a sales price calculation section 319, a sales price notification section 320, a billing section 321, a sales history management section 322, and a fee distribution section 323. The fee management section 318 collects a copyright fee set by the usage information setting section 307 within the content creator terminal 301 and a sales fee set by the usage information setting section 310 within the sales location terminal 302, and manages this collected price information.

The sales price calculation section 319, calculates a final sales priced for each application of the content, based on the copyright fee and sales fee managed by the fee management section 318. When this is done, the sales prices includes a billing fee for the billing center 305 itself. An example of the calculation of the sales price for the case in which all of the copyright fee, the sales fee, and the billing fee are absolute prices, would be the summation of these fees.

The sales price notification section 320 makes notification sales location terminal 302 and the user terminal 303 of the content sales price calculated by the sales price calculation section 319. Notification of this sales price is also made to the license issuing center 314, and at the license issuing center 304 the condition for issuing the container key and the usage approved information can be a verification of whether or not the user has actually paid a proper fee.

The billing section 321 collects the sales price according to the application selected by the user from the approved usage information. After completion of the billing processing, notification is made to the license issuing center 304, and a request is made for issuance of the container key and the like.

The sales history management section 322 monitors the payment status from the user with respect to each content and manages just how much each content is sold for each application. From this sales history and the copyright fee in accordance with each content application managed by the fee management section 318, an understanding is obtained as to the overall copyright fee to be paid to the copyright holder, a notification of this being made to the content creator terminal 301 via the license issuing center 4.

The fee distribution section 323, in accordance with information managed by the fee management section 318, distributes the content usage fee received from the user to the content copyright holder and to the sales location as a copyright fee and a sales fee.

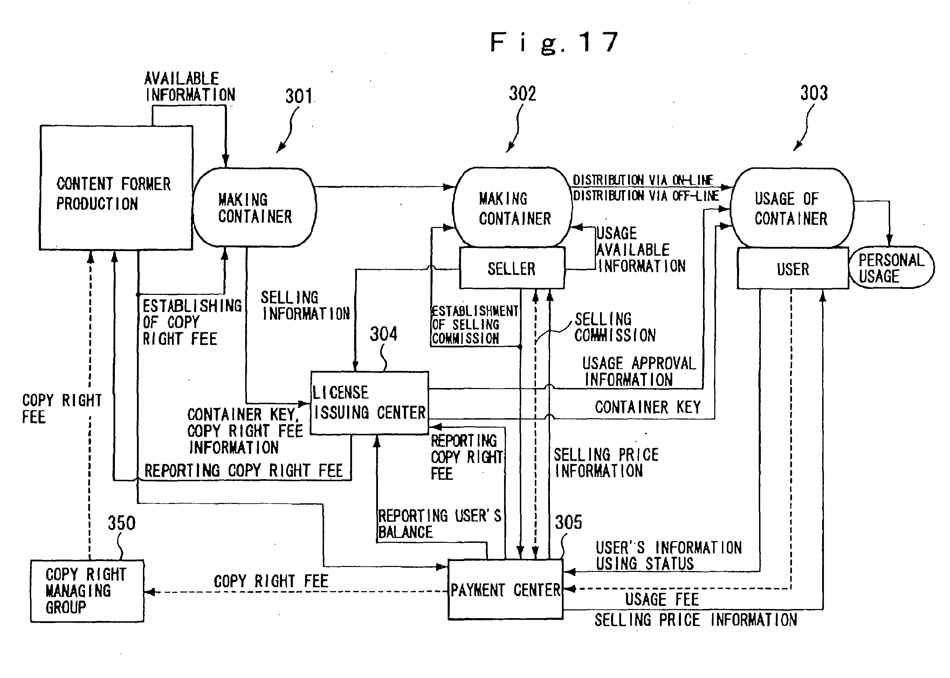

Fig. 17 is a drawing illustrating a series of operations in a content distribution system configured as shown in Fig. 16. In Fig. 17, first the content creator or the like creates the content at the content creator terminal 301. The copyright holder sets the approved usage information that establishes the permitted range of use and copyright fee for the content. Additionally, the creator uses the container encoder 308 to form a container from the content and the approved usage information, so as to generate a container file.

When generating a container, the container encoder 308 generates a container key that serves as a code key, this container key being encrypted and incorporated into the content file. Additionally, the container encoder 308 stores the generated container key into the license issuing center 304, and stores the copyright fee set by the creator into the billing center 305. The creator then gives a container file generated in this manner to a sales location.

The sales location sets the sales price of the container by adding its own sales fee, and uses the container encoder 311 to add this to the approved usage information. The container encoder 311 stores the sales information set by the usage information setting section 310 into the license issuing center 304 and also stores the sales fee into the billing center 305. At this point, the distribution information of the fee paid by the user is made up of the copyright fee stored in the billing center 305 by the sales fee of the sales location stored in the billing center 305 and the copyright fee stored in the billing center 305 by the container encoder 308. The final sales price is calculated, by adding the fee of the billing center 305 to these fees, notification being then made to the sales location and the user.

The sales location sells the container by placing the secondary container file created by the container encoder 311 onto a web site, or by writing it onto a CD-ROM. The user can obtain the container by downloading the container from the sales location web site, or via the CD-ROM. The approved usage information within the obtained container is referenced so as to determine what applications can be used and what the usage fee is, and a desired application is selected.

The user pays a usage fee in accordance with the selected application to the billing center 305. When this is done, it is sufficient to pay the established usage fee to purchase the content, without having to consider such fees as the copyright fee or the sales fee. In response to this payment, the billing center 305 makes notification to the license issuing center 304 that billing processing has been completed and request the issuing of a container key. Upon receiving this notification, the license issuing center 304 issues to the user approved usage information and a container key in accordance with the amount paid.

Only when the container key and approved usage information are obtained in this manner is it possible to use the container decoder 313. The user uses the container decoder 313 which is now usable, to convert the content within the container to a usable form. When this is done, the container decoder 313 can only be used in a way that is noted in the approved usage information. By doing this, it is possible for the user to use the content only by method of use selected by the user.

At this point, in the case in which the user selects usage by playback, the container decoder 313 uses the container key to decrypt the encrypted content within the container in memory, so that a still picture or moving image can be displayed or printed out. In the case of music content, output is made to a speaker. However, the content is not written into an external memory device as a file having a generally used graphics or music format. Therefore, after playback the user is not left with a content file, and the user is unable to perform copying or editing of the decrypted data, or to distributed copied content to a third party. That is, in this case the user can only use the content for personal use.

In the case in which the user selects use of the content for copying and editing, the container decoder 313 converts the content file expanded in memory to a general format data file and outputs same to outside the container decoder 313, whereupon it is written into an external memory device. By doing this, it is possible for the user to use the content file of a general format with applications possessed by the user, for example.

Additionally, at the billing center 305, a usage fee for the content is charged to the user. Based on distribution information formed by a copyright fee stored by the content creator terminal 301 and a sales fee stored by the sales location terminal 302, the usage fee paid by the user is distributed to the copyright holder and the sales location. When this is done, the copyright fee for the content copyright holder can alternately be paid via a copyright management group 350.

Additionally, the billing center 305 manages the copyright fee to be received by the copyright holder, such as a content creator, by monitoring the usage status of the content, based on the application information selected by the user from the approved usage information and the paid fee. Notification is made of the copyright fee information via, for example, the license issuing center 304.

As described in detail above, in this embodiment of the present invention, the copyright fee and sales fee set for each individual content and sales location are stored in a billing center 305, which is a third party, and the final sales price of the content is established by the billing center 305. By doing this, there is absolutely no need for the content creator or sales location to consider fees set by other entities in the distribution process, it being sufficient for them to merely establish their own fees. Because the distribution of fees is also performed at the billing center 305, it is not necessary to perform troublesome processing. It is therefore possible to greatly reduce the burden on the content creator and the sales location. While this embodiment was described for the case in which there is just one sales location, it will be readily understood that an even greater advantage is obtained in the case of a complex distribution system having a plurality of sales locations.

In this embodiment, at the billing center 305, which is a third party, the copyright fee to be taken by the copyright holder is managed, and notification thereof is made to the copyright holder. By doing this, by comparing the content of the notification with the actual amount that is paid, it is possible for the copyright holder to easily verify whether improper actions have occurred. Therefore, it is possible to prevent problems that occurred in the past, such as payment of a fee that is willfully made too small for the actual sales of the content, or otherwise paying a copyright fee that is too small.

Additionally, in this embodiment a container encoder that performs encrypting of the content and a container decoder that performs decrypting of the content are provided, a function being imparted to the container decoder which limits the usage of the content to a range specified by the approved usage information given from the license issuing center 304 in response to the fee paid by the user. By doing this, unless the user pays a fee commensurate with the application, it is possible to prevent use of the content with that application, and possible to effectively set a copyright fee that is commensurate with the form of use (content application) of the user.

In the above-noted embodiments, although the description was for the case in which the copyright fees and sales fees set for each content creator and each sales location individually are stored in the billing center 305, it is alternately possible to store these fees in the license issuing center 304, at which the final sales price is calculated. In this case, however, the copyright fees and sales fees stored in the license issuing center 304, and the calculated sales price of the content must be notified to the billing center 305.

In the above-noted embodiments, although the description was for the case in which the license issuing center 304 and the billing center 305 are provided separately, it is alternately possible to combine these two elements. However, by separating the license issuing center 304 and the billing center 305, and performing copyright management by issuing a container key or the like from the license issuing center 304 in response to a request from the billing center 305, it is possible to provide a further improvement in security of the copyright management.

Although in the above-noted embodiments the descriptions were for the case in which notification of the copyright fee to be received by the copyright holder is given from the billing center 305 to the license issuing center 304, it is alternatively possible to make this notification directly from the billing center 305 to the copyright holder. Additionally, although the examples described were those in which notification of a calculated copyright fee is made based on the content usage status, it is alternatively possible to make notification of information directly with regard to usage status (sales amount and the applications used therein).

In the foregoing embodiments, although the descriptions were for the case in which approved usage information is extracted from within the container obtained by the user and referenced in selecting a usable application, the present invention is not restricted in this manner, and it is alternatively possible, for example, to have the license issuing center 304 provide, upon user request, approved usage information collected from the content creator or sales location.

In the content distribution systems of the above-described embodiments of the present invention, the content distribution system the terminals and centers comprise a computer CPU or MPU, a RAM, and a ROM or the like, and can be implemented by a program stored in RAM or ROM.

Therefore, it is possible to store into a storage medium such as a CD-ROM a program which causes a computer to achieve the above-noted functions, this program being read into the computer. In addition to a CD-ROM, it is possible to use a CD-R, a floppy disk, a hard disk, an optical disk, a magneto-optical disk, a DVD, a magnetic tape, or a non-volatile memory card or the like as the storage medium for storing the above-noted program.

By the computer executing the supplied program, not only are the above-noted embodiments implemented, but also in the case in which this program acts in concert with an operating system or other application running on the computer to implement the functions of the above-noted embodiment, or in a case in which all or part of the processing of the supplied program is performed by a functional expansion board or function expansion unit of the computer so as to achieve the functions of the above-noted embodiment, this program is encompassed in the embodiment of the present invention.

As explained above, the system for distributing content formed by digital information of the present invention is a very sophisticated digital content distributing system and it is further desirable that this digital content distributing system is accompanied by a specially designed container decode-application programming interface which can be installed into any kind of client program so that a client, a user of this system, can directly access to container files.

By using this container decode-application programming interface (CDAPI), any encrypted content stored in a container file can be automatically decrypted via this CDAPI interface so that the user can use such encrypted digital information easily as if the user can directly access to original digital information which has not been encrypted.

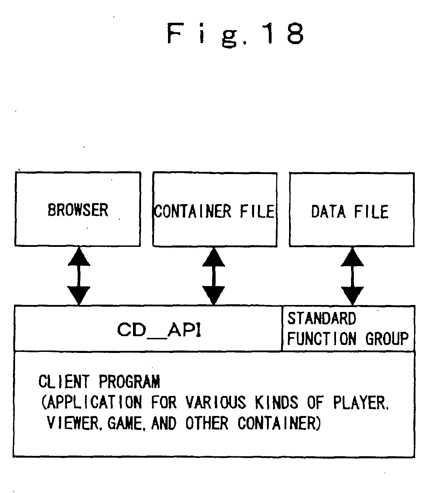

Further, in the system for distributing content of the present invention, utilizing this CDAPI interface, the user can freely establish a frame work for using container, as shown in Fig. 18.

As shown in Fig. 18, in the system for distributing content of the present invention, as a function for accessing to container, a function having the same function as that of ANSI standard file input function(fopen/fread/feof/ ftell) can be provided.

On the other hand, in the system for distributing content of the present invention, a current digital container distributing system can be easily changed to a digital container distributing system which can work as the system for distributing content of the present invention, with simply replacing a program which is used in a portion at which a current client program, for example, a game, any kind of player, a viewer or the like, is accessing to data file, with the above-mentioned CDAPI interface.

In the system for distributing content of the present invention, as auxiliary function other than a function for accessing to container, a function for associating with a browser, for obtaining user information or for clearing right information, or the like can be available.

Furthermore, each of the foregoing embodiments is merely exemplary of the present invention, and will not be understood as limiting the technical scope of the present invention. That is, the present invention can take on a variety of other forms without extending beyond the spirit and the essential features of the present invention as described herein.

According to this embodiment of the present invention, by storing price information set at each digital content distribution terminal into a third party terminal, at which the usage fee for the content is calculated, it is possible to merely establish a local fee, and not necessary to distribute the fee paid by the user, thereby greatly reducing the burden on the content distributor.

According to another feature of this example of the present invention, because the usage status of digital content is monitoring separately from the digital content distribution terminal, and notification of the information obtained by this monitoring is made to the digital content provider, it is possible for the content provider to easily determine whether or not improper actions have been taken, and it is further possible to effectively prevent improper action at a sales location, for example.

According to yet another feature of this example of the present invention, a limiting means is provided, whereby when applications among various applications for which use of digital content is either approved or denied are set as usage information, from which a user selects an application, limitation of usage is made to only the function of the selected application, the result being that it is possible for the copyright holder to specify in detail the method of usage of the content by setting the approved usage information, and further to set the copyright fee in accordance with the content application.

In a conventional digital container distributing system, if a user could use a player for music or the like, he can directly use a content of a container but he is not permitted to directly access to any of container with utilizing a personally oriented software or tool.

On the other hand, in the digital container distributing system of the present invention, a container access function which is substantially convertible with a standard input/output function such as fopen or fread which are written by C-language, is supplied as an application programming interface and thus it is very easy for any user to modify current software so as to use it with the digital container distributing system of the present invention.

This means that by using the specifically developed container decode-application programming interface (CDAPI), a user can directly use a personally oriented container.

However, in a conventional digital container distributing system, even though a user can use a container other than music container and image container, there must exist a case in which a content should be extracted from a container as a file, to make container including contents therein per se would lost an important meaning or to make such container would not be perfect from a security point of view.

In addition, in the digital container distributing system of the present invention, an user management system function or payment system function can be optionally used so as to enable the digital container distributing system of the present invention to be easily associated with a current system.

More over, it cannot be perfectly guaranteed whether such container technology could be prevented from being used unlawfully, with 100%, depending upon technical level of a technical people who wishes to make hacking.

However, in the digital container distributing system of the present invention, since a digital watermark system and a content's unlawful usage monitoring system which can be used for checking and tracing the unlawful usage of the content even after the content had erroneously been leaked or revealed, the digital container distributing system of the present invention can flexibly cope with this problems.

In actual application form of the digital container distributing system of the present invention, there is a game data distributing site which requires user to open a container with personally unique tool or software.

In this application, for example, an option data such as a map data, a rule data, character data or the like, used for the game software developed uniquely, is distributed in a form of container and a user can directly access to the container file thus distributed from the game program utilizing the application programming interface (API).

While, in a conventional digital container distributing system, since a data file should once be extracted from a container file, there must be exist a chance at which such digital information stored in a form of data file could be copied and thus making container thereabout per se, would loose a special meaning.

Further in a separate application for the digital container distributing system of the present invention, there is an image information distributing site which requires to distribute a personally unique container.

In this application, for example, when an image information representing an image of a popular singer, should be distributed, an unique container including preview data or sound data in addition to the image data can be formed and distributed and thereafter, it can be played back such image information simultaneously with such sound data utilizing a specifically designed viewer.

However, in a conventional digital container distributing system, it is quite difficult to select a content to be included into a container freely and to form a unique container freely.

Further, in an other application in the digital container distributing system of the present invention, there is a distribution process for distributing a container product in a provider which is a site introducing member system.

In a conventional digital container distributing system, under this kind of application, even the site has data base with regard to member's information the site has to have a separate data base with regard to member's information for distributing container and thus in this case, double information are stored in this same system and this situation causes the total system to be uneffectiveness as well as to be inconvenient system for user.

On the other hand, since the digital container distributing system of the present invention already has a data base including the member's information, only an user key management item can be added to this system in order to distribute the container and thus already existing data can be effectively used therefor.

In a further separate application form of the present invention, there is a questionnaire site for promotion.

In this application, the digital container distributing system of the present invention can make a container for promotion to be distributed and it enables a user to open an advertisement page and to have him answered such questionnaire through internet or the like.

Each feature disclosed in this specification (which term includes the claims) and/or shown in the drawings may be incorporated in the invention independently of other disclosed and/or illustrated features.

Statements in this specification of the "objects of the invention" relate to preferred embodiments of the invention, but not necessarily to all embodiments of the invention falling within the claims.

The description of the invention with reference to the drawings is by way of example only.

The text of the abstract filed herewith is repeated here as part of the specification.

A content distribution system has a content processing means for encrypting content into which is embedded a digital watermark so as to obtain distributed content, a distribution contract execution means for the content, a containing forming means, which, with respect to distribution content selected by a user adds a content driving program based on a prescribed usage environment and usage conditions, and management program to manage a content usage status, so as to form a container, a distribution means, which distributes the container to a transmission path, a electronic player supplying means, which supplies the electronic player that plays back the container, a playback means, a content usage status analysis means, which, for each played back content of the container, transfers the playback status to a usage status analysis system, so as to manage recording of the usage status of the content, and an improper usage monitoring means, which monitors improper use of the content, wherein a computer is caused to control the above-noted means.

## Claims

1. A content distribution system comprising a content processing means for encrypting content into which is embedded a digital watermark so as to obtain distributed content, a distribution contract execution means for the content, a container forming means, which, with respect to distribution content selected by a user, adds a content driving program based on a prescribed usage environment and usage conditions, and management program to manage a content usage status, so as to form a container, a distribution means, which distributes the container to a transmission path, a electronic player supplying means, which supplies the an electronic player that plays back the container, a playback means, a content usage status analysis means, which, for each played back content of the container, transfers the playback status to a usage status analysis system, so as to manage recording of the usage status of the content.

2. A method for distributing content formed by digital informatîon, this method comprising:
a step of embedding at least one of copyright information, distributor information, and user information into the digital content as a digital watermark,
a step of encrypting the content into which such digital water mark has been embedded and adding to the content information with regard to either one of the form of use of the content or information with regard to a copyright fee, so as to create content to be distributed,
a step whereby the distributor publicly discloses, via the internet or other transmission path, a list of content, including one or a plurality of the contents, in each of which watermark information has been embedded into digital information,
a step whereby a user accesses the content list via the transmission path, using the user's terminal,
a step whereby if the user wishes to use a content selected by the user, the user accesses a contract execution system connected to the transmission path using the user's terminal via the transmission path, whereupon between the distributor and the user, while referencing at least one of the usage environment predeterminedly established by the distributor for each one of the contents, selected from the usage conditions and the usage fee, with respect to the distribution of the contents, performing at least one of a registration of the name of the user of the content, selection of the usage environment and a selection of the usage conditions, and specifically performing an establishment of at least one of the usage fee, including copyright fee and a method of payment which should be determined by at least one of such usage environment and usage condition as selected.
a step whereby the distributor forms a container by further adding to the selected content for distribution information with regard to at least one of the content usage environment and the content usage conditions, and the name of the user, and further adding there to a content drive program based upon such content usage environment and the content usage conditions and a management program for managing the usage state of the content,
a step whereby, in the case in which at the distributor there has been verification that the user has made payment of the prescribed usage fee, the container is distributed to the transmission path via the distribution system,
a step whereby an electronic player including a decryption key for playback of the container is prepared and supplied,
a step whereby the user priorly downloads an electronic player to the user's terminal,
a step whereby the user uses the electronic player to play back the distributed content,
a step whereby the electronic player reads out a part of the encrypted content, and plays back the part of the content as it decrypts same, the part thereof being deleted after playback, and another part of the content being read out therefrom and played back as it is decrypted, followed by deletion thereof after the end of playback,this process being repeated thereafter,
a step whereby, at every time when each content included in the container being playbacked, either a playback status is directly transferred to an usage status analysis system connected to the transmission path by causing the management program included within the container to operate, or the content usage status is first temporarily stored into a storage means provided within the container, and then transferred via the transmission path, to a usage status analysis system connected to the transmission path, so as to manage recording of the usage status for each content,
a step whereby in the case in which an attempt is made to use the content such that the content usage environment according to the contract conditions is violated or in which the content usage conditions will be violated, or in a case in which the content is used under a condition exceeding the pre-established condition or in a case in which an attempt of usage is made in violation of a pre-established warning, the management program provided within the container terminates the drive program of the container,
a step whereby constant global monitoring operation is performed via the transmission path with regard to whether or not an attempt is being made to improperly use the content, and in the case in which content resembling to a content that is suspected of improper usage is discovered, an operation is executed thereto to identify whether or not the content includes digital watermark information and, if digital watermark information is detected, a comparison is made with respect to the watermark information of each content to have been detected, in a content storage database into which are stored contents into which has been priorly embedded digital watermark information,
a step whereby, in the case in which payment to the distributor of a usage fee for the prescribed content has been received from the user by the distributor, processing is performed so as to pay a prescribed copyright fee to a copyright owner of the content, based on the copyright information of the distributed content, and
a step whereby a computer controls at least one step of the foregoing steps.

3. A method for distributing content according to claim 2, further comprising a step whereby, in the contract system in a case in which a prescribed user are established with reference to usage of a prescribed content, information of said user is embedded into said watermark information.

4. A method for distributing content according to claim 2 or claim 3, wherein said pre-established warning be such that, for example, when said user of said content 10 continues to use the content 10 at the user terminal 5 in an off-line manner, under the scope of the usage conditions, a prompt is made so as to have the user to connect said usage thereof through said transmission path 4.

5. A method for distributing content according to any one of claim 2 to claim 4, further comprising a step whereby at least part of non-encrypted content stored in a prescribed database and into which a watermark is embedded is disclosed on said transmission path as a previewing sample.

6. A method for distributing content according to any one of claim 2 to claim 4, further comprising a step whereby at least part of non-encrypted content stored in a prescribed database and into which a watermark is embedded is disclosed by copying onto a prescribed storage medium and publicly disclosed, said user using said user terminal to playback and preview said storage medium.

7. A method for distributing content according to any one of claim 2 to claim 6, wherein said container formed by execution of said contract execution system is distributed to said transmission path, said method further comprising a step of generating a user information management database, a product management database, and a sales management database from information content usage status analyzed by said usage status analysis system.

8. A method for distributing content according to any one of claim 2 to claim 7, wherein said content includes music, a still image, a copyright mark, and a privacy mark, or other public mark indicating that the origin of said content is proper, or a digital publication, map, or moving image such as a video.

9. A method for distributing content according to any one of claim 2 to claim 8, wherein in a case in which the content includes a public mark that indicates that the content is of proper origin and when such public mark can be confirmed on the transmission line, the public mark part is clicked at the terminal or when the public mark is verified on the storage medium, the medium is brought to a improper usage monitoring center as an off-line manner, thereby said watermark information of the public mark part is detected, a comparison thereof with information of a content storage database being performed and, if the origin of the content is judged to be proper by coincidence with the information of the content storage database, a certification from the center is issued.

10. A system for distribution of content formed by digital information, this system having:
means for embedding at least one of copyright information, distributor information, and user information into the digital content as a digital watermark,
means for processing content into which such digital water mark has been embedded, for distribution to by encrypting the content and adding to the content information with regard to either one of the form of use of the content or information with regard to a copyright fee, so as to create content to be distributed,
means for public disclosure by the distributor, via a transmission path, of a list of content, including one or a plurality of the contents, into which watermark information has been embedded,
means for access by a user of the content list via the transmission path, using the user's terminal,
means for contract execution, connected to the transmission path, which, if the user wishes to use a content selected by the user, can be accessed by the user using the user's terminal via the transmission path, whereupon between the distributor and the user, while referencing at least one of the usage environment predeterminedly established by the distributor for each one of the contents, selected from the usage conditions and the usage fee, with respect to the distribution of the contents, performing at least one of a registration of the name of the user of the content, selection of the usage environment and a selection of the usage conditions, and specifically performing an establishment of at least one of the usage fee, including copyright fee and a method of payment which should be determined by at least one of such usage environment and usage condition as selected.
means for forming container, whereby the distributor forms a container by further adding to the selected encrypted content for distribution information with regard to at least one of the content usage environment and the content usage conditions, and the name of the user, and further adding there to a content drive program based upon such content usage environment and the content usage conditions and a management program for managing the usage state of the content,
means for distributing container, whereby, in the case in which at the distributor there has been verification that the user has made payment of the prescribed usage fee, by transfer into a priorly specified bank account, or by electronic payment, the container is distributed to the transmission path via the distribution system,
means for supplying an electronic player, whereby an electronic player, which includes a decryption key for playback of the container, is prepared and supplied,
means for downloading an electronic player, whereby the user priorly downloads to the user's terminal the electronic player,
means for playbacking the container, whereby the user uses the electronic player to play back the distributed container,
the electronic player reading out a part of the encrypted content, and playing back the part of the content as it decrypts same, the part thereof being deleted after playback, and another part of the content being read out therefrom and played back as it is decrypted, followed by deletion thereof after the end of playback, this process being repeated thereafter,
means for analysing content usage status, whereby, at every time when each content included in the container being playbacked, either a playback status is directly transferred to a usage status analysis system connected to the transmission path, or the content usage status is first temporarily stored into a storage means provided within the container, and then transferred via the transmission path, to a usage status analysis system connected to the transmission path, so as to manage recording of the usage status for each content,
a management programming means whereby, in the case in which an attempt is made to use the content such that the content usage environment according to the contract conditions is violated or in which the content usage conditions will be violated, or in a case in which the content is used under a condition exceeding the pre-established condition or in a case in which an attempt of usage is made in violation of a pre-established warning, the management program provided within the container terminates the drive program of the container,
means for monitoring improper usage of contents, whereby constant global monitoring operation is performed via the transmission path with regard to whether or not an attempt is being made to improperly use the content, and in the case in which content resembling to a content that is suspected of improper usage is discovered, an operation is executed thereto to identify whether or not the content includes digital watermark information and, if digital watermark information is detected, a comparison is made with respect to the watermark information of each content to have been detected, in a content storage database into which are stored contents into which has been priorly embedded digital watermark information,
means for paying copyright fees, whereby, in the case in which payment with respect to prescribed content has been received from the user by the distributor, processing is performed so as to pay a prescribed copyright fee to a copyright owner of the content, based on the copyright information of the distributed content,
and further wherein of the above-noted means, minimally a disclosing means for disclosing the stored content for distribution to a transmission path, the contract execution means, the container distribution means, a user terminal means, a usage status analysis system means, and a content improper usage monitoring means are connected to the transmission path, and wherein a computer is caused to perform control thereof.

11. A system for distribution of content according to claim 10, wherein said transmission path is the Internet.

12. A system for distribution of content according to claim 10 or claim 11, wherein in a case in which a prescribed user are established with respect to an usage of a prescribed content, means for embedding into said watermark information said user information is employed.

13. A system for distribution of content according to any one of claim 10 to claim 12, wherein said pre-established warning is such that when said user of said content continues to use said content at said user terminal through off-line manner under the scope of said usage conditions, a prompt is made for the user to connect to said transmission path transmission path so as to use the content through on-line manner.

14. A system for distribution of content according to any one of claim 10 to claim 13, further comprising a previewing sample providing means whereby at least part of non-encrypted content stored in a prescribed database and into which a watermark is embedded is disclosed as a previewing sample.

15. A system for distribution of content according to any one of claim 10 to claim 14, further comprising a previewing sample providing means whereby at least part of non-encrypted content stored in a prescribed database is copied onto a prescribed storage medium and publicly disclosed for playback by said user using said user terminal.

16. A system for distribution of content according to any one of claim 10 to claim 15, further comprising a database forming means whereby said container formed by execution of said contract execution system is distributed to said transmission path through said container distributing system, and at least one of a user information management database, a product management database, and a sales management database being formed from information content usage status analyzed by said usage status analysis system.

17. A system for distribution of content according to any one of claim 10 to claim 16, wherein said content includes music, a still image, a copyright mark, and a privacy mark, or other public mark indicating that the origin of said content is proper, or a digital publication, map, or moving image such as a video.

18. A method for distribution of content according to any one of claim 1 to claim 9, further comprising a improper usage monitoring means, wherein in a case in which it is not clear whether or not the origin of the content is proper and the digital content is comfirmed through the transmission path, the digital container is clicked at a terminal or if said public mark is verified on said storage medium and brought off-line to a improper usage monitoring center, said watermark information of said public mark part is detected, a comparison thereof with information of a content storage database being performed and, if the origin of said content is judged to be proper by coincidence with said information of the content storage database, a certification document from said center is issued.

19. A system for distribution of content according to any one of claim 10 to claim 17, further comprising a improper usage monitoring means, wherein in a case in which it is not clear whether or not the origin of the content is proper and the digital content is comfirmed through the transmission path, the digital container is clicked at a terminal or if said public mark is verified on said storage medium and brought off-line to a improper usage monitoring center, said watermark information of said public mark part is detected, a comparison thereof with information of a content storage database being performed and, if the origin of said content is judged to be proper by coincidence with said information of the content storage database, a certification document from said center is issued.

20. A system for distribution of content according to any one of claim 1 to claim 1 to claim 9, further comprising an improper usage monitoring means, wherein in a case in which said content includes a public mark that indicates that the content is of proper origin, if said public mark part is clicked at a terminal or if said public mark is verified on said storage medium and brought off-line to a improper usage monitoring center, said watermark information of said public mark part is detected, a comparison thereof with information of a content storage database being performed and, if the origin of said content is judged to be proper by coincidence with said information of the content storage database, a certification document from said center is issued.

21. A system for distribution of content according to any one of claim 1 to claim 10 to claim 17, further comprising an improper usage monitoring means, wherein in a case in which said content includes a public mark that indicates that the content is of proper origin, if said public mark part is clicked at a terminal or if said public mark is verified on said storage medium and brought off-line to a improper usage monitoring center, said watermark information of said public mark part is detected, a comparison thereof with information of a content storage database being performed and, if the origin of said content is judged to be proper by coincidence with said information of the content storage database, a certification document from said center is issued.

22. A storage medium onto which is stored a program for the purpose of performing computer control of at least part of processing steps, which include:
a step of embedding as watermark information into content formed by digital information, at least one of copyright information, distributor information, and user information;
a step of encrypting said content into which is embedded watermark information, and adding to said content information with regard to a form of use of said content and information with regard to a copyright fee, so as to create content to be distributed;
a step whereby said distributor publicly discloses, via a transmission path, a list of content, singular or multiple, in which watermark information has been embedded into digital information;
a step whereby a user accesses said content list via said transmission path, using a user terminal;
a step whereby if said user wishes to use a content selected by said user, said user accesses a contract execution system connected to said transmission path using said user terminal via said transmission path, whereupon between said distributor and said user, while referencing a usage environment established by said content, usage conditions, and usage fee, minimally registration of a name of said user of said content, selection of said usage environment, selection of said usage conditions, establishment of said usage fee, including copyright fee, which is established by said usage conditions, and specification of a method of payment are performed;
a step after establishing an agreement in said contract execution system as to a contract between said distributor and said user with regard to distribution of said content, whereby said distributor verifies whether or not said user has paid said contract fee;
a step whereby said distributor forms a container by further adding to said selected encrypted content for distribution information with regard to said content usage environment, usage conditions, and said name of the user, and a content drive program and a management program for managing said usage state of the content, based on said usage environment and said usage conditions;
a step whereby, in a case in which at said distributor there has been verification that said user has made payment of said prescribed usage fee, by transfer into a priorly specified bank account, or by electronic payment, said container is distributed to said transmission path via said distribution system;
a step whereby an electronic player including a decryption key for playback of said container is prepared and supplied;
a step whereby said user priorly downloads said electronic player to said user terminal;
a step whereby said user uses said electronic player to play back said distributed content;
a step whereby the electronic player reads out part of said encrypted content, and plays back said content as it decrypts it, said part being deleted after playback, and another part of said content being read out and played back as it is decrypted, followed by deletion thereof after the end of playback, said process being repeated thereafter;
a step whereby, for each content playback, either a playback status is directly transferred to a usage status analysis system connected to said transmission path by causing said management program included within said container to operate, or said content usage status is first temporarily stored into a storage means provided within said container, and then transferred to a usage status analysis system connected to the transmission path, so as to manage recording of the usage status for each content;
a step whereby in a case in which an attempt is made to use said content such that said content usage environment according to said contract conditions is violated or in which said content usage conditions will be violated, or a case in which an attempt of usage is made in violation of a pre-established warning, said management program provided within said container terminates said drive program of said container;
a step whereby constant global monitoring operation is performed via said transmission path with regard to whether or not an attempt is being made to improperly use said content, and in a case in which content resembling content that is suspected of improper usage is discovered, an operation is executed to identify whether or not said content includes digital watermark information and, if digital watermark information is detected, a comparison is made with respect to said watermark information of each content in a content storage database into which is stored content into which has been priorly embedded digital watermark information; and
a step whereby, in a case in which payment to said distributor of a usage fee for said prescribed content has been received from said user by said distributor, processing is performed so as to pay a prescribed copyright fee to a copyright owner of said content, based on said copyright information of said distributed content.

23. A digital content distribution container for distributing digital content on a transmission path, comprising:
means for storing digital content encrypted by a pre-established encrypting means;
means for outputting said digital content to the outside;
means for outputting the digital content from said storage means to said external output means;
means for storing at least one of a usage environment and usage condition of said digital content;
means for verifying usage status including at least one of a digital content environment judgment means, a number of usage times counter means, which counts the number of usage times each time digital content is used, a clock means, and a time counter means, which counts an amount of elapsed time after distribution of said distribution container;
an operating input means, which is operated by a user when using said digital content, and
a container drive control means, which
in a case in which said user operates said operating input means in order to use said digital content, if usage of said digital content is within usage conditions for said digital content stored in said usage conditions storage means, causes said container driving means to operate, so as to use said digital content, and
in a case in which usage of said digital content violates said digital content usage conditions stored in the usage conditions storage means, causes said container driving means to stop and also transfers to a separately provided digital content usage conditions analysis means said usage status of said digital content each time said user uses said digital content.

24. A digital content distribution container according to claim 23, wherein said usage status verification means includes one of:
a usage environment judgment means, which each time said distribution container is used, makes a judgment as to whether or not said usage environment of the distribution container coincides with said digital content usage environment condition stores in said usage conditions storage means;
a counter which counts the number of usage times each time said container is used and number of usage times judgment means, which performs a comparison with the number of usage times for the digital content stored in said usage conditions storage means; and
a usage elapsed time judgment means, which counts the elapsed time from the time at which the distribution container is distributed until the current time, via a clock means, and makes a judgment as to whether or not said elapsed time conforms to said usage time conditions of the digital content stored in said usage conditions storage means.

25. A digital content distribution container according to claim 23 or claim 24, wherein said container driving means has a function which, in a case in which a judgment is made from any of said usage environment judgment means, said usage number of tines judgment means, and said usage elapsed time judgment means that usage of said digital content does not coincide with priorly established usage conditions of said digital content, performs control of said container driving means so as to stop said container drive, and report said results to said user.

26. A digital content distribution container according to any one of claim 23 to claim 25, wherein said container drive control means comprises a function which, in a case in which usage of said digital content by said user is off-line, temporarily stores at least part of usage environment information, usage number of times information, and usage time information in a separately provided auxiliary storage means, a message output function making a warning to said user so as to execute the next usage of said digital content on-line, and a function which, in the case in which the user is executing the digital content on-line, transfers said information stored in said auxiliary storage means to said digital content usage status analysis means.

27. A digital content distribution container according to any one of claim 23 to claim 27, wherein said container driving control means comprises a function whereby, after said user has used said digital content off-line and a prescribed amount of time has elapsed, or in a case in which there is no subsequent usage or no on-line usage after a prescribed number of times, a warning instruction is issued to said container driving means to stop drive.

28. A digital content distribution container for distributing digital content on a transmission path, comprising a function performing control, whereby, in response to a digital content storage means into which is stored digital content encrypted in accordance with a pre-established encryption means, a usage conditions storage means into which are stored usage conditions contracted for between said user and said container distributor, and input of usage input command information from said user, output is made to an appropriate playback means, a judgment being made as to whether or not the usage of said digital content by said user is within usage conditions contracted for between said user and said container distributor and, in a case in which it is judged that usage is within said usage conditions, output of said digital content is permitted, but in a case in which it is judged that usage is beyond said usage conditions, output of said digital content is not permitted, and further in said case in which usage of the digital content is permitted, usage information is transferred to a separately provided digital content usage status analysis means, via said transmission path.

29. An electronic player comprising:
an input means connected to said digital content distribution container;
a buffer means, which reads part of said encrypted digital content from a digital content storage means provided in said distribution container and temporarily stores said digital content;
a decryption key storage means, which stores a decryption key for decrypting said encrypted digital content;
a decrypting means, which uses said decryption key to decrypt said part of said encrypted digital content stored in said buffer means, so as to obtain the original digital content;
a playback means, which plays back said part of said decrypted digital content; and
a control means, which controls said foregoing means.

30. An electronic player comprising:
a step of extracting part of said encrypted digital content from a digital content storage means provided in a digital content distribution container and, via an input means, temporarily storing said part into a buffer means;
a step of using a decryption key to decrypt said encrypted said digital content, so as to obtain the original digital content from a part of the encrypted digital content stored in said buffer means;
a step of playing back said decrypted part of digital content;
a step of reading out another part of decrypted digital content from said digital content storage means provided in said digital content distribution container and storing said part in said buffer means;
a step of decrypting said other part of encrypted digital content to obtain the original digital content thereof;
a step of playing back said other part of decrypted digital content;
a step of repeating said steps until all parts of said encrypted digital content are played back;
a step of deleting data that has already been processed, in either said buffer storage step, said decrypting step, or said playback step, by overwriting said data with next input data, or using a separately provided data deleting means.

31. An electronic player according to claim 28 or claim 29, disposed within a transmission path, and configured so as to enable downloading to a user terminal, either with or without charging a fee.

32. A content distribution system comprising:
means for embedding into digital content watermark information identifying said digital content, as a digital watermark identifying said content;
means for managing approval/denial information with regard to approval or denial of use of placing said digital content on a web page;
means for a web page and obtaining digital content residing on said web page;
means for obtaining embedded identification information as a digital watermark from said obtained digital content; and
means for accessing identification information extracted from said digital content and information managed by said approval/denial information management means so as to detect improper use of said digital content.

33. A content distribution system according to claim 32, wherein said approval/denial information management means minimally manages identification information of digital content, use of which has either been approved or denied, and resource information representing a web page onto which placing of said digital content has either been approved or denied, and wherein said improper use detection means accesses said identification information extracted form said digital content, resource information representing said web page destination, and identification information and resource information managed by said approval/denial information management means, so as to detect improper usage of said digital content.

34. A content distribution system according to claim 32, wherein said approval/denial information management means manages identification information of digital content that has either been approved or denies placement on said web page and resource information representing a web page onto which placement of said digital content has been either approved or denied, establishing correspondence therebetween, and wherein said improper usage detection means accesses identification information extracted from said digital content, resource information representing the search destination web page, and digital content identification information managed by said approval/denial information management means, so as to detect improper usage of said digital content.

35. A content distribution system according to any one of claim 32 to claim 34, further comprising an improper usage notification means whereby notification is made of a detection result from said improper usage detection means.

36. A content distribution system according to any one of claim 32 to claim 34, including said content searching means, said content searching means is formed by a software module that transfers to a web site and which sequentially downloads a content file resident on said web page.

37. A content distribution system according to claim 36, wherein said content searching means searches web pages on a network, by tracing through links paced on said web site.

38. A content distribution system according to claim 37, wherein when searching through links placed on said web site, information representing web pages that have already been searched is held as a history, which is accesses to as to not search web pages that have already been searched.

39. A content distribution system according to claim 37, wherein said content searching means sequentially searches web pages on a network, giving priority to links placed on web sites have a large amount of digital content.

40. A content distribution system comprising:
means for distributing encrypted digital content;
means for receiving and using provided digital content; and
means for billing a usage fee for said digital content and issuing a characteristics code key for each digital content, under a condition that said usage fee is paid,
wherein said billing an approval issuing means, in addition to issuing a code key for each digital content, issues characteristic user key for each user using said digital content, so as to limit usage of said digital content using both said code key and said user information.

41. A content distribution system according to claim 40, wherein when a user obtains said code key, at the code key issuing entity, processing is performed so as to limit use of said code key using said user key.

42. A content distribution system according to claim 40, wherein when encrypted digital content are obtained by said user based on said code key, at the code key issuing entity, processing is performed to limit use of said encrypted digital content using said user key.

43. A content distribution system according to claim 40, wherein when said encrypted digital content is obtained by said user based on said code key, at the code key issuing entity, processing is performed to limit use of said encrypted digital content using said user key.

44. A content distribution system according to claim 40, wherein when said encrypted digital content is obtained by said user, processing is performed to limit use of said code key using said user key.

45. A content distribution system performing billing for use of obtained digital content, comprising:
means for setting usage information for approval or denial of applications of various applications, including placing of said digital content on a web page;
means for managing information with regard to approval or denial of use of placing said digital content on a web page;
means for limiting usage, which uses not only a characteristic code key for each encrypted content but also a characteristics user key for each user using said digital content, so as to limit usage of said digital content;
means for embedding digital content identification information as a digital watermark into said digital content;
means for searching the web page and obtaining digital content residing on said web page;
means for extracting said identification information embedded as a digital watermark into said digital content from said digital content; and
means for accessing said identification information extracted from said digital content and information managed by said approval/denial information management means so as to detect improper use of said digital content.

46. A content distribution system according to claim 45, wherein
said approval/denial information management means manages a least identification information of digital content approved or denied for placement on said web page, and
wherein said improper use detection means accesses identification information extracted from said digital content and identification information managed by said approval/denial information management means so as to detect improper use of said digital content.

47. A content distribution system according to claim 45, wherein
said approval/denial information management means accesses identification information of digital content which was approved or denied for placement on said web page and resource information representing the web page for which approval or denial of placement of said digital content was made, so as to establish a relationship therebetween, and
wherein said improper use detection means accesses identification information extracted from said digital content, resource information representing a web page of a search destination, and identification information and resource information managed by said approval/denial information management means, so as to detect improper use of said digital content.

48. A content distribution system according to any one of claim 45 to claim 47, further comprising means for making an improper use notification that gives notification of a detection result of said improper use detection means.

49. A method for content distribution, which manages information regarding approval or denial of placement of digital content on a web page on a network, wherein identification information of said digital content into which is embedded a digital watermark is extracted from obtained digital content, and access said extracted identification information and said managed information so as to detect improper use of said digital content.

50. A method for content distribution, which, in a content distribution system that bills for use of obtained digital content, in addition to using a characteristic code key that encrypts each content, also uses a characteristic user key for each user using said digital content, so as to limit use of said digital content.

51. A method for content distribution, which, in a system that bills for use of obtained digital content,
sets an application, among various applications, including placement of said digital content on a web page, which is to be approved or denied, and manages information with regard to approval and denial of placement of said digital content on a web page, and
uses not only a characteristic code key that encrypts each content, but also a characteristic user key for each user using said digital content, so as to limit use of said digital content,
whereby said web page is searched and digital content on said web page is obtained, identification information of said digital content into which a digital watermark is embedded being extracted from said obtained digital content, and said extracted identification information and said managed information being accessed so as to detect improper use of said digital content.

52. A content distribution system comprising on a network a distribution terminal distributing digital content and a user terminal that receives and uses distributed digital content, wherein billing is performed for use of said digital content, said content distribution system comprising:
means for billing management, which receives, via said network, from said terminals price information of each; and
means for calculating, based on each price information managed by said fee management means, a usage fee for said digital content.

53. A content distribution system according to claim 52, wherein said fee management means and calculation means are provided at a third party terminal provided on said network separate from said terminals.

54. A content distribution system according to either claim 52 or claim 53, further comprising means whereby, based on each price information managed by said fee management means, a usage fee with respect to use of said digital content is distributed.

55. A content distribution system comprising on a network a distribution terminal distributing digital content and a user terminal that receives and uses distributed digital content, wherein billing is performed for use of said digital content, said content distribution system comprising:
means for managing usage history which, based on billing information with respect to use of said digital content, manages usage status of said digital content; and
means for notification, which makes notification to a provider of said digital content of a distribution fee responsive to a usage status obtained from said usage history management means or to a distribution fee responsive thereto;
wherein said usage history management means and said notification means are provided at a third party terminal.

56. A content distribution system comprising on a network a distribution terminal distributing digital content and a user terminal that receives and uses distributed digital content, wherein billing is performed for use of said digital content, said content distribution system comprising:
means for setting usage information, which sets as usage information an application that is either approved or denied for use among various applications of said digital content at said distribution terminal;
means for selecting a desired application from applications approved for use by said usage information setting means; and
means for limiting usage such that the usage of said digital content is limited to just an application selected by said selection means.

57. A content distribution system according to claim 56, wherein said usage limiting means comprises:
means for encoding, which places usage information set by said usage information setting means and said digital content in a container;
means for usage approval management which issues usage approval information for the purpose of limiting usage of said content to only an application selected by said selection means; and
means for changing a method of extracting said digital content, based on said usage approval information issued by said usage approval management means when said digital content is extracted from said container.

58. A content distribution system comprising on a network a distribution terminal distributing digital content and a user terminal that receives and uses distributed digital content, wherein billing is performed for use of said digital content, a third party terminal being provided on said network separate from said terminals,
wherein said third party terminal comprises:
means for fee management, which receives from each said distribution terminal, via said network, price information set thereby and manages said price information;
means for calculating, based on price information managed by said fee management means, a usage fee for said digital content;
means for usage history management, which, based on billing information with respect to usage of said digital content, manages usage status of said digital content; and
means for notification, which makes notification to a provider of said digital content of a distribution fee responsive to a usage status obtained from said usage history management means or to a distribution fee responsive thereto,
wherein said distribution terminal comprises:
means for usage information setting for setting an application for which either approval or denial of use, of various applications,
wherein said user terminal comprises:
means for selection, which selects a desired application from applications for which usage is approved by said usage information setting means; and
means for execution, which execute usage of said digital content,based on limitations of usage-approved information given from said third party terminal,
and wherein said third party terminal further has means for usage approval management, which issues usage approval information so as to limit usage of said digital content to said application selected by said selection means.

59. A terminal apparatus connected to a network and separate from a distribution terminal distributing digital content, said terminal apparatus comprising:
means for fee management, which receives from each said distribution terminal, via said network, price information set thereby and manages said price information;
means for calculating, based on price information managed by said fee management means, a usage fee for said digital content; and
means for fee distribution, which, based on price information managed by said fee management means, distributes a collected price with respect to usage of said digital content.

60. A terminal apparatus connected to a network and separate from a distribution terminal distributing digital content, said terminal apparatus comprising:
means for usage history management, which manages a usage status of said digital content, based on billing information with respect to usage of said digital content; and
means for notification, which makes notification to a provider of said digital content, responsive to a usage status obtained from said usage history management means or to a distribution fee responsive thereto.

61. A terminal apparatus connected to a network and separate from a distribution terminal distributing digital content, said terminal apparatus comprising:
means for selecting, which selects a desired application from applications for which use of said digital content has been approved, according to usage information set by said distribution terminal; and
means for decoding, which extracts said digital content from a container into which have been placed said digital content and said usage information, so as to change them to a usable condition,
wherein said decoding means, when said digital content are extracted from said container, changes a method extraction, according to usage approval information issues responsive to an application selected by said selection means.

62. A method for distribution of digital content comprising:
a step of storing price information set by a distribution terminal for digital content into a third party terminal provided separately on a network and separately from said distribution terminal, via said network; and
a step of calculating a usage fee for said digital content, based on price information stored into said third party terminal.

63. A method for distribution of digital content comprising:
a step of monitoring a usage status of said digital content at a third party terminal provided on a network separate from a distribution terminal distributing said digital content; and
a step of notifying a provider of said digital content of a usage status obtained by monitoring or a distribution fee responsive thereto.

64. A content distribution system comprising:
a step of setting, as usage information, an application for which approval or denial of usage of said digital content has been made, from among various application of said digital content; and
a step of selecting, at a user terminal receiving and using said digital content, a desired application from applications approved for usage according to said usage information; and
a step of performing control so that usage of said digital content is limited to said selected application.
